# EUROPÄISCHE PATENTSCHRIFT

(11) **EP 3 676 205 B1**
(45) Veröffentlichungstag und Bekanntmachung des Hinweises auf die Patenterteilung: **05.07.2023**
(21) Anmeldenummer: 18755453.0
(22) Anmeldetag: 14.08.2018
(51) Int. Cl.: B65G 47/53, B65G 47/96, B65G 17/24

(54) **VERFAHREN UND VORRICHTUNG ZUM TRANSFERIEREN VON FÖRDERGÜTERN ZWISCHEN ZWEI FÖRDERVORRICHTUNGEN SOWIE EIN FÖRDERSYSTEM**
METHOD AND DEVICE FOR TRANSFERRING TRANSPORTED MATERIALS BETWEEN TWO CONVEYOR DEVICES, AND CONVEYOR SYSTEM
PROCÉDÉ ET DISPOSITIF SERVANT À TRANSFÉRER DES ARTICLES À CONVOYER ENTRE DEUX DISPOSITIFS DE CONVOYAGE, AINSI QUE SYSTÈME DE CONVOYAGE

(30) Priorität: 28.08.2017 CH 10702017
(43) Veröffentlichungstag der Anmeldung: 08.07.2020
(73) Patentinhaber: WRH Walter Reist Holding AG, 8272 Ermatingen (CH)
(72) Erfinder: BRETZ, Markus, 8704 Herrliberg (CH)
(74) Vertreter: Frei Patent Attorneys
(86) Internationale Anmeldenummer: PCT/EP2018/072007
(87) Internationale Veröffentlichungsnummer: WO 2019/042761

(56) Entgegenhaltungen:
- EP-A1- 1 120 369
- EP-A1- 1 388 510
- CH-A1- 710 608
- JP-A- S53 128 873
- US-A1- 2004 134 751
- US-A1- 2008 121 498
- US-A1- 2011 277 420
- US-B1- 6 571 937

## Beschreibung

Die Erfindung liegt auf dem Gebiet der Fördertechnik und betrifft ein Verfahren und eine Vorrichtung zum Transferieren von Fördergütern von einem Zuförderer an einen Wegförderer.

Durch den zunehmenden Online-Handel werden in Umschlagzentren immer grössere Mengen von Fördergütern, meist in Form von Paketen, verarbeitet. Die grossen Mengen an Fördergütern sind eine grosse Herausforderung für die Umschlagzentren. So sollen die Fördergüter in den Umschlagzentren möglichst speditiv verarbeitet werden, damit diese ihren Empfänger schnellstmöglich erreichen.

In den Umschlagzentren werden die eintreffenden Fördergüter in Sortier- und Verteilsysteme eingespiesen. In einem der ersten Schritte werden die am Fördergut angeordneten Identifikationsinformationen erfasst, welche erlauben, das Fördergut einer Zustellörtlichkeit zuzuordnen.

Diese Zustellörtlichkeit kann z. B. ein Land, eine Region, ein Bezirk, eine Ortschaft, eine Strasse oder eine vollständige Empfängeradresse sein.

Eine der Hauptaufgaben der Umschlagzentren ist es, die Fördergüter mittels so genannten Sortern nach Zustellörtlichkeiten zu sortieren und in Gruppen zusammenzufassen, welche den Zustellörtlichkeiten entsprechen.

So sind beispielsweise so genannte Kippschalensorter bekannt, welche ein Fördersystem zur Beförderung und Sortieren von Fördergütern mittels kippbaren Förderschalen bilden. Beim Kippschalensorter werden die Fördergütern in Kippschalen an Abgabestellen vorbei gefördert. Sobald das Fördergut die richtige Abgabestelle erreicht hat, wird die Kippschale über einen Kippmechanismus in eine Schrägstellung versetzt und die Fördergüter gleiten seitlich über die Förderschale zu einer Übernahmeeinrichtung hin ab.

Die Kippschalen sind auf einem Fahrwerk angeordnet. Das Fahrwerk kann aus miteinander verketten Förderelementen bestehen und kann über Gleitelemente oder Laufrollen entlang einer Unterlage, insbesondere einer Führungsschiene, gleitend oder rollend geführt sein.

Ein solcher Kippschalensorter wird beispielsweise in der Veröffentlichungsschrift US 5,632,589 beschrieben.

Die Veröffentlichungsschriften WO 2017/076541 A1 und WO 2013/075714 A1 beschreiben jeweils einen Sortiermechanismus mit kippbaren Förderstreckensegmenten zum Sortieren von Paketen oder Gepäckstücken.

Die Veröffentlichungsschrift EP 1 719 721 B1 beschreibt eine Sortiervorrichtung mit einer Neigevorrichtung zum Kippen des Förderorgans mit Förderbehälter zwecks Abgabe von Produkten aus den Förderbehältern.

Die Veröffentlichungsschrift EP 1 388 510 A1 beschreibt ein Transportsystem mit einem Förderer und einem Neigemechanismus mittels welchem Förderbehälter des Förderers während ihrer Förderung entlang der Förderstrecke zwecks Entladen von Fördergütern in Förderrichtung betrachtet zur Seite neigbar sind, wobei der Neigemechanismus dazu ausgebildet ist, die Förderbehälter teilweise vom Förderorgan des Förderers abzuheben und wobei der Neigemechanismus einen Förderantrieb enthält, mittels welchem die Förderbehälter entlang des Neigemechanismus in Förderrichtung unabhängig vom Förderorgan förderbar sind.

Obwohl der Automatisierungsgrad in solchen Umschlagzentren gross ist, sind gewisse Arbeitsschritte immer noch manuell auszuführen.

Dies ist beispielsweise bei Fördergütern der Fall, welche aufgrund besonderer Eigenschaften, wie z. B. ihrer Geometrie, Gestalt oder Struktur nicht in einen herkömmlichen, vollautomatisierten Verarbeitungsprozess eingeschleust werden können.

Diese besonderen Fördergüter müssen vielmehr separat verarbeitet und einem Sorter zugefördert werden. Die Zuführung der Fördergüter in den Verarbeitungsprozess erfolgt in der Regel manuell aus Transportbehältern bzw. Bereitstellungsbehältern.

Bevor diese Fördergüter allerdings einem Sorter zugefördert werden können, müssen von diesen über eine Erfassungseinrichtung Identifikationsinformationen ermittelt werden, welche die Bestimmung der für die Sortierung notwendigen Zustellörtlichkeit erlauben.

So erfolgt die Erfassung der Identifikationsinformationen beispielsweise in einem als Bereitstellungsförderer ausgelegten Zuförderer, welchem die Fördergüter manuell zugeführt werden.

Da die Fördergüter unförmig, z. b. rundlich, sein können (Wegkippen oder Abrollen von der Förderbahn) sowie Verpackungsschnüre (Verwicklungsgefahr mit dem Förderorgan) und offen liegende Klebeflächen von Klebebändern (Festkleben am Förderorgan) aufweisen können, werden diese im Zuförderer insbesondere in Förderschalen gefördert. Die Förderschalen schirmen die Fördergüter vom Förderorgan ab und geben diesen zudem umfassenden seitlichen Halt.

Die Fördergüter werden nach erfolgreicher Identifikation zwecks Übergabe an einen Kippschalen-Sorter durch den Bereitstellungsförderer in einen Transferbereich gefördert.

Da der Bereitstellungsförderer und der Sorter in der Regel mit unterschiedlichen Fördergeschwindigkeiten betrieben werden, ist der Transfervorgang vom Bereitstellungsförderer zum Sorter von erhöhter Komplexität.

Es ist nun eine Aufgabe der vorliegenden Erfindung, ein Verfahren und eine Vorrichtung zum Übergeben von Fördergütern von einem Zuförderer, insbesondere einem Bereitstellungsförderer, an einen Wegförderer, enthaltend Förderbehälter, insbesondere einen Kippschalenförderer, vorzuschlagen. Das Verfahren und die Vorrichtung sollen es ermöglichen, die Fördergüter unter optimaler Ausnutzung der Förderkapazitäten beider Förderer effizient vom Zuförderer an den Wegförderer zu übergeben.

Es ist eine weitere Aufgabe der vorliegenden Erfindung, den Rücklauf an nicht transferierten Fördergütern des Zuförderers möglichst klein zu halten.

Es ist ferner eine Aufgabe der vorliegenden Erfindung, Förderbehälter des Wegförderers möglichst lückenlos mit Fördergütern vom Zuförderer zu besetzen.

Wenigstens eine Aufgabe wird mit den Merkmalen der unabhängigen Ansprüche 1 und 15 gelöst. Die abhängigen Ansprüche sowie die Beschreibung und die Figuren beinhalten besondere Ausführungsformen und Weiterbildungen der Erfindung.

Die Erfindung betrifft also ein Verfahren zum Transferieren von Fördergütern von mindestens einem Zuförderer an einen Wegförderer in einem Transferbereich. Der mindestens eine Zuförderer umfasst ein entlang einer Zuförderstrecke angetriebenes Förderorgan zum Fördern von Fördergütern in den Transferbereich. Der Wegförderer enthält entlang einer Transferförderstrecke bewegbare Förderbehälter zur Übernahme der von dem mindestens einen Zuförderer abgegebenen Fördergüter.

Das Förderorgan ist während des Förderbetriebes insbesondere kontinuierlich angetrieben.

Der mindestens eine Zuförderer enthält nun erfindungsgemäss eine Beschleunigungseinrichtung zum Beschleunigen von, dem Förderorgan aufliegenden Fördergütern relativ zur Fördergeschwindigkeit des Förderorgans zum Transferbereich hin, insbesondere entlang der Zuförderstrecke.

Die Zuförderstrecke bildet hierzu in Förderrichtung vor dem Transferbereich insbesondere einen Beschleunigungsstreckenabschnitt aus. Der Beschleunigungsstreckenabschnitt ist insbesondere unmittelbar vor dem Transferbereich angeordnet. Die Beschleunigungseinrichtung ist entlang des Beschleunigungsstreckenabschnitts angeordnet.

Die Fördergüter werden nun über die Beschleunigungseinrichtung zum Transferbereich hin relativ zur Fördergeschwindigkeit des Förderorgans beschleunigt und zwecks Abgabe des Fördergutes in eine takt-synchrone Nebeneinanderförderung mit einem Förderbehälter des Wegförderers gebracht.

Das heisst, die Fördergüter des Zuförderers werden entlang des Beschleunigungsstreckenabschnittes derart beschleunigt und mit einer Fördergeschwindigkeit bewegt, dass diese takt-synchron mit den Förderbehältern des Wegförderers in den Transferbereich gefördert werden und mit Förderbehältern des Wegförderers so genannten Transferpaarungen ausbilden.

Transferpaarung bedeutet, dass in Förderrichtung betrachtet zwecks Transfer der Fördergüter jeweils Fördergut des Zuförderers neben einem Förderbehälter des Wegförderers angeordnet ist, d.h. eine Nebeneinanderförderung ausgebildet wird.

Die Zuförderstrecke des mindestens einen Zuförderers und die Transferförderstrecke des Wegförderers verlaufen im Transferbereich und insbesondere auch entlang des oben genannten Beschleunigungsstreckenabschnittes insbesondere parallel nebeneinander. Die Förderrichtungen der beiden Förderer sind im Transferbereich und insbesondere auch entlang des Beschleunigungsstreckenabschnittes insbesondere gleichgerichtet. Die Förderstrecke verläuft im Transferbereich und insbesondere auch entlang des Beschleunigungsstreckenabschnittes insbesondere geradlinig.

Gemäss einer besonderen Ausführungsvariante der Erfindung verläuft im Transferbereich entlang der Transferförderstrecke des Wegförderers in Förderrichtung betrachtet auf beiden Seiten jeweils eine Zuförderstrecke eines Zuförderers. Das heisst, die Transferförderstecke des Wegförderers verläuft zwischen zwei Zuförderstrecken eines Zuförderers. Beide Zuförderstrecken umfassen einen oben beschriebenen Beschleunigungsstreckenabschnitt.

Die beiden Zuförderstrecken können von einem gemeinsamen Zuförderer ausgebildet werden. Die beiden Zuförderstrecken werden allerdings insbesondere von zwei separaten Zuförderern ausgebildet.

Entsprechend werden im Transferbereich abwechselnd von beiden Seiten, das heisst von beiden Zuförderstrecken Fördergüter in die Förderbehälter des Wegförderers transferiert.

Die Zuförderung von Fördergütern von zwei Zuförderern in den Transferbereich kann vorgesehen sein, wenn der Wegförderer die wesentlich höhere, z. B. die doppelte, Verarbeitungskapazität aufweist und entsprechend auch mit einer höheren Fördergeschwindigkeit betrieben wird als der bzw. die Zuförderer. Auf diese Weise kann eine volle Auslastung des Wegförderers erreicht werden.

Gemäss der oben genannten Ausführungsvariante wird im Regelbetrieb insbesondere jeder zweite Förderbehälter des Wegförderers von einer ersten Seite und jeder zweite um eins versetzte Förderbehälter des Wegförderers von einer zweiten Seite mit einem Fördergut beschickt.

Regelbetrieb heisst insbesondere, dass jedes in den Transferbereich geförderte Fördergut an den Wegförderer übergeben wird, und dass jeder Förderbehälter des Wegförderers ein Fördergut von dem oder den Zuförderer übernimmt.

Das heisst, in Ausführung des Verfahrens gemäss der oben genannten Ausführungsvariante werden die Fördergüter eines ersten Zuförderers entlang des Beschleunigungsstreckenabschnittes beschleunigt, wobei die Fördergüter mit jedem zweiten Förderbehälter des Wegförderers in eine takt-synchrone Nebeneinanderförderung gebracht werden und mit diesen eine Transferpaarung ausbilden.

Die Fördergüter des zweiten Zuförderers werden entlang des Beschleunigungsstreckenabschnittes ebenfalls beschleunigt, wobei die Fördergüter mit jeder zweiten, um eins versetzte Förderschale des Wegförderers in eine takt-synchrone Nebeneinanderförderung gebracht werden und mit diesen eine Transferpaarung ausbilden.

Die Förderbehälter des Wegförderers werden insbesondere mit gleichmässiger Geschwindigkeit durch den Transferbereich bewegt.

Die Förderbehälter des Wegförderers werden im Transferbereich und insbesondere auch entlang des Beschleunigungsstreckenabschnittes insbesondere gleichmässig voneinander beabstandet in Förderrichtung bewegt.

Gemäss der Erfindung umfasst der Zuförderer Förderbehälter, welche verbindungsfrei auf dem Förderorgan aufliegen, und in welchen die Fördergüter entlang der Zuförderstrecke in den Transferbereich gefördert werden.

Entsprechend treffen obige Aussagen betreffend der Förderung und Positionierung der Fördergüter entlang der Zuförderstrecke auch auf den Förderbehälter zu.

Die Förderbehälter des Zuförderers bilden insbesondere eine Vertiefung, z. B. eine konkave Vertiefung, zur Aufnahme des Fördergutes aus. Die Förderbehälter sind insbesondere gegen oben offen. Der Förderbehälter kann eine Förderkiste, ein Fördertablet oder insbesondere eine Förderschale sein.

Die Förderbehälter des Wegförderers bilden ebenfalls insbesondere eine Vertiefung, z. B. eine konkave Vertiefung, zur Aufnahme des Fördergutes aus. Die Förderbehälter sind insbesondere gegen oben offen. Die Förderbehälter sind insbesondere Förderschalen.

Es können nun bei einer Störung des oben genannten Regelbetriebs so genannte Transfersonderfälle auftreten, welche nicht mehr unter den oben genannten Regelbetrieb fallen.

Gemäss einem ersten solchen Transfersonderfall soll oder kann aus einem durch den Transferbereich geförderten Förderbehälter eines Zuförderers kein Fördergut an den Wegförderer abgegeben werden. Der Förderbehälter des Zuförderers ist also nicht transferbereit.

Das Fördergut soll vielmehr am Transferbereich vorbei gefördert und z. B. in eine Beschickungsstrecke zurückgefördert oder an einer nachfolgenden Ausschleuseinrichtung ausgeschleust werden.

Es kann auch sein, dass der Förderbehälter des Zuförderers kein Fördergut enthält. Entsprechend kann auch kein Fördergut an den Wegförderer abgeben werden.

Eine Abwicklung dieses Transfersonderfalls nach dem oben beschriebenen Regelbetrieb würde bedeuten, dass der mit dem nicht transferbereiten Förderbehälter des Zuförderers gepaarte Förderbehälter des Wegförderers im Transferbereich kein Fördergut empfangen und folglich leer bleiben würde. Dadurch würden allerdings unnötigerweise Förderkapazitäten des Wegförderers ungenutzt belassen.

Gemäss einer Weiterbildung des Verfahrens ist daher vorgesehen, dass Förderbehälter des Zuförderers, welche in Förderrichtung betrachtet hinter einem nicht transferbereiten Förderbehälter des Zuförderers nachfolgen, entlang beider Zuförderstrecken in Förderrichtung betrachtet mittels der Beschleunigungseinrichtung um eine Förderbehälter-Position des Wegförderers nach vorne repositioniert werden.

Repositionieren heisst, dass die betreffenden Förderbehälter eine vom Regelbetrieb abweichende Transferposition entlang der Zuförderstrecke einnehmen.

Die Repositionierung geschieht insbesondere entlang des Beschleunigungsstreckenabschnittes.

Da die Förderbehälter des Wegförderers, wie oben bereits beschrieben, wechselseitig von beiden Seiten mit Fördergütern beschickt werden, rückt in diesem Fall in Förderrichtung ein Förderbehälter der gegenüber liegenden Zuförderstrecke auf Höhe der betroffenen Transferpaarung mit dem nicht transferbereiten Förderbehälter auf bzw. vor. Der betroffene Förderbehälter des Wegförderers bildet folglich mit zwei Förderbehältern des Wegförderers eine Transferpaarung aus.

Entsprechend wird vom auf bzw. vorgerückten Förderbehälter der Zuförderstrecke auf der anderen Seite der Transferstrecke ein Fördergut an den Förderbehälter des Wegförderers der betroffenen Transferpaarung abgegeben.

Die nachfolgenden Förderbehälter beider Zuförderstrecken rücken in Förderrichtung entsprechend um eine Förderbehälter-Position des Wegförderers nach. Dies führt dazu, dass sich die wechselseitige Abgabe der Fördergüter um eine Förderbehälter-Position des Wegförderers verschiebt.

Dadurch wird erreicht, dass trotz eines nicht aus einem Förderbehälter des Zuförderers transferierten Förderguts sämtliche Förderbehälter des Wegförderers mit Fördergüter beschickt werden.

Gemäss einem zweiten Transfersonderfall kann einem durch den Transferbereich geförderten Förderbehälter des Wegförderers kein Fördergut abgegeben werden. Der Förderbehälter des Wegförderers ist also nicht transferbereit.

Das Vorliegen eines nicht transferbereiten Förderbehälters des Wegförderers kann technischer Natur sein, indem der betreffende Förderbehälter z. B. defekt ist. Es kann auch sein, dass der betreffende Förderbehälter bereits mit einem Fördergut belegt ist.

Eine Abwicklung dieses Transfersonderfalls nach dem oben beschriebenen Regelbetrieb würde bedeuten, dass der mit dem nicht transferbereiten Förderbehälter des Wegförderers gepaarte Förderbehälter des Zuförderers im Transferbereich sein Fördergut nicht abgeben kann und somit zurückfördern müsste. Dadurch würden allerdings unnötigerweise transferbereite Fördergüter im Zuförderer zurückbehalten.

Gemäss einer Weiterbildung des Verfahrens ist daher vorgesehen, dass bei Vorliegen eines nicht transferbereiten Förderbehälters des Wegförderers, in welchen kein Fördergut transferiert werden kann, der mit dem nicht transferbereiten Förderbehälter eine Transferpaarung ausbildende Förderbehälter eines Zuförderers sowie diesem auf beiden Zuförderstrecken in Förderrichtung betrachtet nachfolgende Förderbehälter mittels der Beschleunigungseinrichtung in Förderrichtung betrachtet um eine Förderbehälter-Position des Wegförderers zurück repositioniert werden.

Die Repositionierung geschieht insbesondere entlang des Beschleunigungsstreckenabschnittes.

Entsprechend bildet der nicht transferbereite Förderbehälter des Wegförderers im Transferbereich keine Transferpaarung aus. Dies führt auch hier dazu, dass sich die wechselseitige Abgabe der Fördergüter um eine Förderbehälter-Position des Wegförderers verschiebt.

Dadurch wird erreicht, dass trotz Vorliegen eines nicht transferbereiten Transportbehälters des Wegförderers sämtliche Fördergüter der in den Transferbereich geförderten Förderbehälter der Zuförderer an Förderbehälter des Wegförderers abgegeben werden können.

Das Förderorgan des mindestens einen Zuförderers wird entlang der Zuführstrecke zwecks Förderung der Fördergüter bzw. der Förderbehälter über einen Antrieb angetrieben.

Das Förderorgan ist insbesondere umlaufend geführt, so dass die Förderanlage eine geschlossene Förderstrecke ausbildet, welche auch die Zuführstrecke beinhaltet.

Das Förderorgan bildet eine dem Fördergut zugewandte, die Förderstrecke definierende, bahnförmige Hauptfläche aus.

Die Hauptfläche definiert insbesondere eine Trennfläche zwischen den oberhalb geförderten Fördergütern bzw. Förderbehältern und den unterhalb angeordneten Anlageteilen, wie Rollenhalterungen, Untergestell, Führungskanal oder Antriebskörper.

Die Hauptfläche verhindert beispielsweise, dass Gegenstände durch Zwischenräume zwischen Rollen, wie nachfolgend noch erläutert, hindurch fallen können. Die Hauptfläche dient auch der Betriebssicherheit, da keine oder nur kleine Lücken zwischen den Förderelementen bestehen und ein Risiko eines Verkantens, Hängenbleibens oder Mitreissens gering ist.

Das Förderorgan umfasst im Weiteren mindestens ein Förderelement. Das mindestens eine Förderelement ist insbesondere flächig bzw. als Flächenelement ausgebildet. Die Hauptfläche wird insbesondere aus einer dem Fördergut zugewandten Oberfläche des mindestens einen Förderelementes ausgebildet.

Das Förderorgan umfasst insbesondere mehrere entlang der Förderstrecke angeordnete Förderelemente, welche insbesondere die bahnförmige Hauptfläche ausbilden. Die Förderelemente können einander in Förderrichtung überlappen.

Das Förderorgan umfasst im Weiteren Rollen, welche über Rollenhalterungen an dem mindestens einen Förderelement angeordnet und um Rollenachsen drehbar in der Rollenhalterung gelagert sind. Die Rollenhalterung kann ein Lagerkäfig sein.

Die Rollen können nun über die Rollenhalterungen wahlweise den Zustand einer Arretierstellung oder einer Antriebsstellung und insbesondere auch einer Freilauflaufstellung einnehmen.

Die Rollen des Förderorgans ragen mindestens teilweise über die Hauptfläche des Förderorgans bzw. Förderelements hinaus, so dass das Fördergut bzw. die Förderbehälter den Rollen bzw. dessen Laufflächen aufliegen. Die Rollen ragen insbesondere durch Ausnehmungen im Förderelement hindurch. Der Förderbehälter kann teilweise oder insbesondere vollständig den Rollen aufliegen.

Die Rollenhalterungen und die Rollen sind jeweils Teil eines Rollenmechanismus. Die verschiedenen Zustände der Rollen werden nun insbesondere durch Wirkelemente hervorgerufen werden, welche auf den Rollenmechanismus einwirken.

Die Rollen sind hierbei insbesondere um physische Rollenachsen drehbar in der Rollenhalterung gelagert.

Wirkelemente bezüglich Freilaufstellung können Stellmittel sein, welche die Rollen während der Bewegung des Förderorgans in einer Freilaufstellung bewegen bzw. in dieser halten. Die Stellmittel sind insbesondere unterhalb der Hauptfläche bzw. unterhalb des mindestens einen Förderelementes angeordnet. Die Stellmittel wirken insbesondere von unten auf den Rollenmechanismus ein.

Die Stellmittel sind insbesondere ortsfest, d.h. stationär in der Förderanlage angeordnet. Das heisst, die Stellmittel bewegen sich nicht mit dem Förderorgan entlang der Förderstrecke.

Die Stellmittel sind insbesondere Kulissenführungen, entlang welchen das Förderorgan mit den Rollenmechanismen bewegt wird. Die Stellmittel können auch zu- und wegschaltbare Kulissen sein, so dass die Rollen entlang einer bestimmten Förderstrecke wahlweise in eine Freilaufstellung gebracht werden können.

Die Stellmittel können beispielsweise direkt oder indirekt auf die physischen Rollenachsen einwirken und so die Rollen in eine Freilaufstellung bringen bzw. in dieser halten. So können die Stellmittel durch eine direkte oder indirekte Krafteinwirkung auf die physischen Rollenachsen eine Verschiebung der Rollen in eine Freilaufstellung bewirken. "Indirekt" bedeutet, dass die Stellmittel z. B. auch auf eine Achshalterung einwirken können, in welchen die physischen Rollenachsen gehalten werden.

Die genannten Stellmittel kommen insbesondere entlang von Staustrecken zum Einsatz
Wirkelemente bezüglich Antriebsstellung können Abrollführungen sein, welche die Rollen während der Bewegung des Förderorgans entlang der Förderstrecke antreiben.

Die Abrollführung bzw. deren Abrollfläche ist insbesondere unterhalb der Hauptfläche bzw. unterhalb des mindestens einen Förderelementes angeordnet. Die Abrollfläche verläuft insbesondere parallel zur Hauptfläche des Förderorgans.

Die Abrollführungen bilden insbesondere eine Abrollfläche aus, welche den Laufflächen der Rollen von unten anliegt. Die Abrollführung ist insbesondere ortsfest, d.h. stationär in der Förderanlage angeordnet. D.h. die Abrollführung wird nicht mit dem Förderorgan entlang der Förderstrecke mitbewegt. Die Abrollführung kann zu- und wegschaltbar sein, so dass die Rollen entlang einer bestimmten Förderstrecke wahlweise angetrieben sein können.

Die Rollen rollen in der Antriebsstellung durch die Förderbewegung des Förderorgans entlang der Förderstrecke in Förderrichtung entlang der Abrollfläche der Abrollführung ab und werden so durch die Abrollführung passiv angetrieben.

Da die Rollen mit der Geschwindigkeit des Förderorgans an der Abrollführung abrollen und die tangentiale Bewegungsrichtung der Laufflächen an der Auflagestelle der Förderbehälter in Förderrichtung gerichtet ist, werden die auf den passiv angetriebenen Rollen aufliegenden Förderbehälter mit der doppelten Geschwindigkeit des Förderorgans in Förderrichtung bewegt.

Gemäss einer Weiterbildung der Abrollführung weist diese anstelle einer stationären Abrollfläche ein angetriebenes Abrollelement mit einer entsprechend bewegten Abrollfläche auf, wie z. B. ein umlaufend angetriebener Antriebsriemen oder Antriebsband. Die Abrollfläche des Abrollelements kann entgegen der Förderrichtung angetrieben werden. Die Abrollfläche des Abrollelements kann auch in Förderrichtung angetrieben werden.

Die dem angetriebenen Abrollelement anliegenden Rollen können nun durch das angetriebene Abrollelement zusätzlich im oder entgegen dem Uhrzeigersinn angetrieben werden. Dadurch lassen sich die Förderbehälter in einer beliebigen Geschwindigkeit unabhängig von der Geschwindigkeit des Förderorgans antreiben.

Wird beispielsweise die Abrollfläche des Abrollelements entgegen der Förderrichtung angetrieben, so bewirkt dies eine zusätzliche Beschleunigung des Förderbehälters in Förderrichtung.

Wird beispielsweise die Abrollfläche des Abrollelements in Förderrichtung angetrieben, so bewirkt dies eine Verlangsamung des Förderbehälters in Förderrichtung gegenüber einem passiven Antrieb durch die Abrollführung. Bei entsprechend hoher Geschwindigkeit des Abrollelementes kann der Förderbehälter sogar langsamer als die Fördergeschwindigkeit oder entgegen der Fördergeschwindigkeit gefördert werden.

Die Beschleunigung kann also eine positive oder negative Beschleunigung sein. Das heisst die Förderbehälter können entlang der Beschleunigungsstrecke gegenüber dem Förderorgan (positiv) beschleunigt oder verzögert werden.

Das Abrollelement wird insbesondere mittels eines über die Steuerungseinrichtung gesteuerten Antriebs angetrieben.

Die genannten Abrollführungen kommen insbesondere entlang von Beschleunigungsstreckenabschnitten zum Einsatz.

Wirkelemente bezüglich Arretierstellung können die Rollen selbst sein, welche sich mit ihrem Eigengewicht, d.h. mittels Schwerkraft, selbst in die Arretierstellung bringen bzw. in dieser verbleiben.

Die Wirkelemente können auch die Förderbehälter und/oder das Fördergut sein, welche mit ihrem Auflagegewicht die Rollen in eine Arretierstellung bringen bzw. in dieser halten.

Die Rollenhalterung kann hierzu ein Arretierelement enthalten, welchem die Rollen durch ihr Eigengewicht und/oder durch das Auflagegewicht des Förderbehälters und/oder des Fördergutes anliegen.

Das Arretierelement und die Rolle bilden dabei einen Reibkontakt aus, welcher ein freies Drehen der Rollen verhindert. Der Reibkontakt blockiert also die Drehung der Rollen. Die Rollen können insbesondere mit ihren Laufflächen dem Arretierelement anliegen.

Entsprechend werden die Fördergüter bzw. die Förderbehälter in der Arretierstellung der Rollen mit der Fördergeschwindigkeit des Förderorgans gefördert. Die Rollen wirken dabei auf die Förderbehälter als Mitnehmer.

Die Laufflächen der Rollen weisen hierzu insbesondere einen hohen Reibungskoeffizienten auf. Dieser sorgt für eine hohe Haft- und Gleitreibung mit den diesen aufliegenden Förderbehältern bzw. mit dem Arretierelement. Die Rollen können z. B. eine Lauffläche aufweisen, welche gummiert ausgebildet ist.

Die Arretierstellung kommt insbesondere entlang einer Beschickungsstrecke oder allgemein bei einem Förderbetrieb zum Einsatz.

Gemäss einer Weiterbildung der Erfindung sind die Rollen derart in der Rollenhalterung gelagert, dass diese permanent mindestens teilweise über die Hauptfläche des Förderelementes hinausragen. Permanent bedeutet über die gesamte Förderstrecke hinweg und in allen drei oben genannten Zuständen. Das heisst, der Rollenmechanismus sieht keine Rollenstellung vor, in welcher die Laufflächen der Rollen vollständig unterhalb der Hauptfläche angeordnet sind.

Die Rollen sind mittels Wirkelementen, wie oben beschrieben, jeweils insbesondere zwischen mindestens zwei räumlich unterschiedlichen Positionen bewegbar. In diesen Positionen nehmen die Rollen unterschiedliche Zustände aus der Gruppe der Zustände, umfassend die Arretierstellung, Freilaufstellung und Antriebsstellung, ein.

Die Bewegung zwischen den mindestens zwei räumlich unterschiedlichen Positionen enthält insbesondere eine Bewegungskomponente quer zur Hauptfläche.

Gemäss einer Weiterbildung der Erfindung sind die Rollen mittels den Wirkelementen jeweils senkrecht zur Hauptfläche zwischen mindestens zwei Positionen bewegbar. Entsprechend ragen die Rollen zwischen den mindestens zwei Positionen um ein unterschiedliches Mass über die Hauptfläche hinaus.

Gemäss einer Weiterbildung des Rollenmechanismus kann die mindestens eine erste räumliche Position der Arretierstellung entsprechen.

Gemäss einer Weiterbildung des Rollenmechanismus kann die mindestens zweite räumliche Position der Freilaufstellung entsprechen.

Gemäss einer Weiterbildung des Rollenmechanismus kann die mindestens zweite räumliche Position der Antriebsstellung entsprechen.

Gemäss einer Weiterbildung des Rollenmechanismus kann die mindestens zweite räumliche Position sowohl der Freilaufstellung als auch der Antriebsstellung entsprechen.

Das Förderelement kann beispielsweise ein plattenförmiges Element bzw. ein Plattenelement sein. Das Förderorgan kann entlang der Förderstrecke mehrere, insbesondere einander überlappende Plattenelemente, enthalten und Teil eines Plattenförderers ein.

Die Plattenelemente können insbesondere an einem sich entlang der Förderstrecke erstreckenden Antriebskörper, z. B. an einem Zugkörper, befestigt sein. Der Antriebskörper und über diesen die Plattenelemente werden über eine Antriebseinrichtung entlang der Förderrichtung angetrieben.

Der Antriebskörper kann ein Gelenkkörper, wie z. B. eine Antriebskette sein. Der Antriebskörper kann entlang einer Führungsschiene, insbesondere in einem Führungskanal einer Führungsschiene, insbesondere rollend oder gleitend geführt sein. Der Antriebskörper kann entsprechend Laufrollen oder Gleitelemente umfassen.

Das mindestens eine Förderelement kann auch ein Modul einer Modulbandkette bzw. Mattenkette sein, wobei die Hauptfläche durch die Modulbandkette bzw. Mattenkette ausgebildet wird. Die Förderelemente sind entsprechend direkt miteinander verbunden, insbesondere verkettet.

Grundsätzlich kann das Förderelement auch ein durchgehendes Förderband mit Durchgangsöffnungen für die Rollen sein.

Die Rollen des oben beschriebenen Förderorgans werden nun entlang der mindestens einen Zuförderstrecke bzw. des Beschleunigungsstreckenabschnittes zum Beschleunigen der Fördergüter bzw. der Förderbehälter relativ zum Förderorgan in einer Antriebsstellung angetrieben. Dabei können sie in eine von der Fördergeschwindigkeit des Förderorgans abweichende Geschwindigkeit versetzt werden Die Fördergüter bzw. die Förderbehälter werden über die angetriebenen Rollen entlang des Beschleunigungsstreckenabschnitts folglich in einer von der Fördergeschwindigkeit des Förderorgans abweichenden Geschwindigkeit gefördert.

Entlang des Beschleunigungsstreckenabschnitts ist insbesondere eine Abrollführung vorgesehen, an welcher die Rollen abrollen und auf diese Weise angetrieben werden.

Gemäss einer Weiterbildung des Verfahrens werden die Förderbehälter des mindestens einen Zuförderers mit den Fördergütern in Förderrichtung betrachtet vor dem Transferbereich und insbesondere vor dem Beschleunigungsstreckenabschnitt entlang einer Staustrecke gepuffert. Die Förderbehälter werden insbesondere über eine Entlassungseinrichtung einzeln aus der Staustrecke zum Transferbereich hin entlassen, insbesondere in den Beschleunigungsstreckenabschnitt entlassen.

Die Rollen des oben beschriebenen Förderorgans sind entlang der Staustrecke insbesondere in einer Freilaufstellung. Entsprechend sind entlang der Staustrecke insbesondere Stellmittel angeordnet, welche für die Freilaufstellung der Rollen sorgen. Im Transferbereich ist insbesondere eine Transfereinrichtung für den Transfer der Fördergüter vom Zuförderer auf den Wegförderer vorgesehen.

Der Transferbereich wird insbesondere durch den Wirkungsbereich der Transfereinrichtung entlang der Förderstrecke definiert.

Nach der Erfindung umfasst der mindestens eine Zuförderer im Transferbereich zwecks Abgabe der Fördergüter an den Wegförderer einen Neigemechanismus zum in Förderrichtung F betrachtet seitlichen Neigen bzw. Kippen bzw. Schrägstellen von Förderbehältern.

Der Neigemechanismus ist entsprechend Teil der Transfereinrichtung oder bildet diese aus.

Die Förderbehälter werden durch den Neigemechanismus an einer Seite angehoben, insbesondere an einer Kurzseite. Dies kann über eine entsprechende Kulissenführung des Neigemechanismus erfolgen.

Der Neigemechanismus hebt die Förderbehälter mindestens teilweise, insbesondere vollständig vom Förderorgan ab. Das Förderorgan bewegt sich entlang des Neigemechanismus insbesondere unterhalb des angehobenen Förderbehälters in Förderrichtung fort.

Entsprechend können die Förderbehälter durch den Neigemechanismus oberhalb bzw. über dem Förderorgan gefördert werden. Die Förderbehälter sind in angehobener Position entlang des Neigemechanismus von der Förderbewegung des Förderorgans insbesondere entkoppelt.

Nach der Erfindung enthält der Neigemechanismus einen Förderantrieb mittels welchem die angehobenen Förderbehälter unabhängig vom Förderorgan in Förderrichtung gefördert werden. Der Förderantrieb kann Antriebsriemen umfassen. Der Förderantrieb wird insbesondere über die Steuerungseinrichtung gesteuert.

Die Förderbehälter werden nun im Transferbereich durch den Neigemechanismus angehoben, beispielsweise an einer Seite, und in eine Schrägstellung versetzt. Dadurch rutscht das Fördergut seitlich auf einen Förderbehälter des Wegförderers ab.

Im Anschluss an den Transfer des Fördergutes führt der Neigemechanismus, insbesondere dessen Kulissenführung, den Förderbehälter durch Absenken und Aufheben der Schrägstellung wieder auf das Förderorgan zurück.

Das Förderorgan wird dabei ebenfalls unterhalb der Förderbehälter durch den Transferbereich bewegt.

Die Transfereinrichtung bzw. der Neigemechanismus kann eine Weiche umfassen, welche mit der Steuerungseinrichtung zusammenwirkt, und über welche die Förderbehälter zwecks selektiver Abgabe der Fördergüter wahlweise in einer Schrägstellung durch den Neigemechanismus geführt oder - ohne Schrägstellung - auf dem Förderorgan weitergefördert werden können.

Die Weiche kommt insbesondere im ersten Transfersonderfall zum Einsatz, gemäss welchem ein Fördergut auf einem Förderbehälter des Zuförderers nicht transferiert werden soll. In diesem Fall wird der betreffende Förderbehälter auf dem Förderorgan aufliegend am Neigemechanismus vorbei gefördert, ohne in Schrägstellung versetzt zu werden.

Die Erfindung betrifft im Weiteren auch eine Vorrichtung zum Transferieren von Fördergütern von mindestens einem Zuförderer an einen Wegförderer in einem Transferbereich, gemäss Anspruch 15.

Der Zuförderer umfasst ein entlang einer Zuförderstrecke in einer Förderrichtung antreibbares Förderorgan zum Fördern von Fördergütern in den Transferbereich. Der Wegförderer enthält entlang einer Transferförderstrecke bewegbare Förderbehälter zur Übernahme der vom Zuförderer abgegebenen Fördergüter.

Die Förderbehälter des Wegförderers sind insbesondere an einem sich entlang der Transferförderstrecke erstreckenden Antriebskörper, wie Antriebskette angeordnet und über diesen miteinander verbunden.

Der Zuförderer ist insbesondere ein Bereitstellungsförderer zum Bereitstellen von Fördergütern an den Wegförderer.

Der Wegförderer ist insbesondere ein Kippschalenförderer.

Der Wegförderer ist insbesondere ein Sorter, wie zum Beispiel ein Kippschalensorter.

Die Fördergüter sind insbesondere Stückgüter. Die Fördergüter sind insbesondere Pakete. Die Fördergüter können auch Gepäckstücke sein. Fördergut in einer Förderschale kann eines oder mehrere Einzelstücke umfassen. Die Fördergüter können mehrteilige Gebinde, Stapel, Zusammenstellungen, Versandgruppen und dergleichen sein.

Die vorliegende Erfindung findet insbesondere Einsatz in Umschlagzentren von Paketdiensten, in Distributionszentren oder in Verteilanlagen für Gepäck.

Nachfolgend wird der Erfindungsgegenstand anhand von Ausführungsbeispielen, welche in den beiliegenden Figuren dargestellt sind näher erläutert. Es zeigen jeweils schematisch:
- Figur 1:: eine perspektivische Ansicht eines Zuförderers;
- Figur 2:: eine Draufsicht einer Förderschale des Zuförderers;
- Figur 3:: eine perspektivische Ansicht einer Förderschale;
- Figur 4:: eine perspektivische Ansicht eines erfindungsgemässen Fördersystems mit einem Zuförderer;
- Figur 5:: eine Draufsicht des Fördersystems nach Figur 4;
- Figur 6:: eine perspektivische Detailansicht des Fördersystems nach Figur 4 aus dem Bereich des Zuförderers;
- Figur 7:: eine perspektivische Ansicht aus dem Transferbereich des Fördersystems;
- Figur 8:: eine perspektivische Ansicht eines Neigemechanismus im Transferbereich;
- Figur 9:: eine perspektivische Ansicht von schräg oben auf eine Ausführungsform eines Förderorgans des Zuförderers;
- Figur 10:: eine Ansicht des Förderorgans aus Figur 9 von vorne;
- Figur 11:: einen Ausschnitt einer Ansicht des Förderorgans aus Figur 9 von vorne, mit einer Rolle in Freilaufstellung;
- Figur 12:: einen Ausschnitt analog zu Figur 11 mit der Rolle in Antriebstellung;
- Figur 13:: einen Ausschnitt analog zu Figur 11 mit der Rolle in Arretierstellung;
- Figur 14:: eine perspektivische Ansicht von oben auf einen Ausschnitt des Zuförderers, umfassend das Förderorgan gemäss Figur 9;
- Figur 15:: eine Ansicht von vorne auf einen Ausschnitt des Zuförderers gemäss Figur 14;
- Figur 16:: eine Draufsicht entlang eines Förderstreckenabschnittes des Fördersystems gemäss den Figuren 4-6 unmittelbar vor dem Transferbereich im regulären Betrieb;
- Figur 17:: eine Draufsicht entlang eines Förderstreckenabschnittes des Fördersystems gemäss den Figuren 4-6 unmittelbar vor dem Transferbereich gemäss einem ersten Transfersonderfall;
- Figur 18:: eine Draufsicht entlang eines Förderstreckenabschnittes des Fördersystems gemäss den Figuren 4-6 unmittelbar vor dem Transferbereich gemäss einem zweiten Transfersonderfall;
- Figur 19:: eine Draufsicht entlang eines Förderstreckenabschnittes des Fördersystems gemäss den Figuren 4-6 unmittelbar vor dem Transferbereich gemäss einem dritten Transfersonderfall.

Grundsätzlich sind in den Figuren gleiche Teile mit gleichen Bezugszeichen versehen.

Für das Verständnis der Erfindung sind gewisse Merkmale in den Figuren nicht dargestellt. Die nachfolgend beschriebenen Ausführungsbeispiele stehen lediglich beispielhaft für den Erfindungsgegenstand und haben keine beschränkende Wirkung.

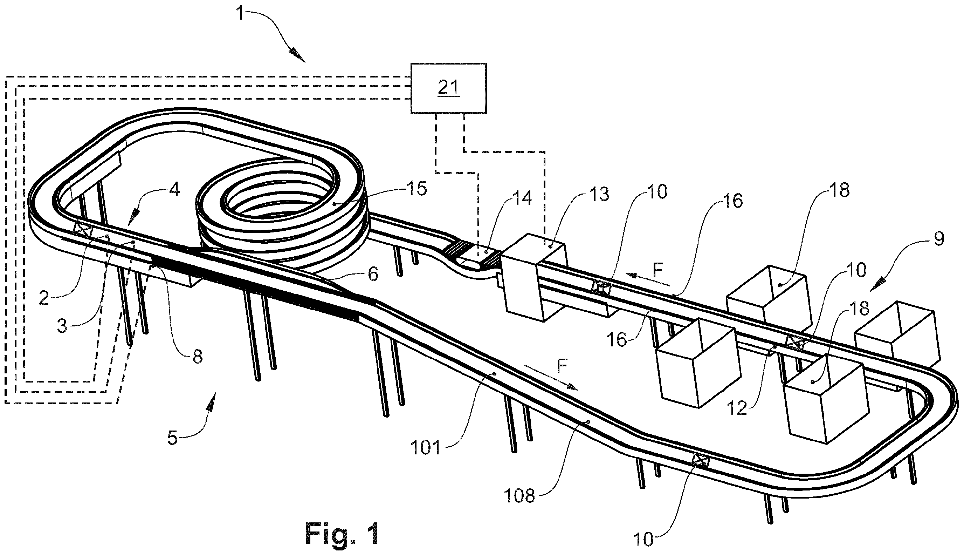

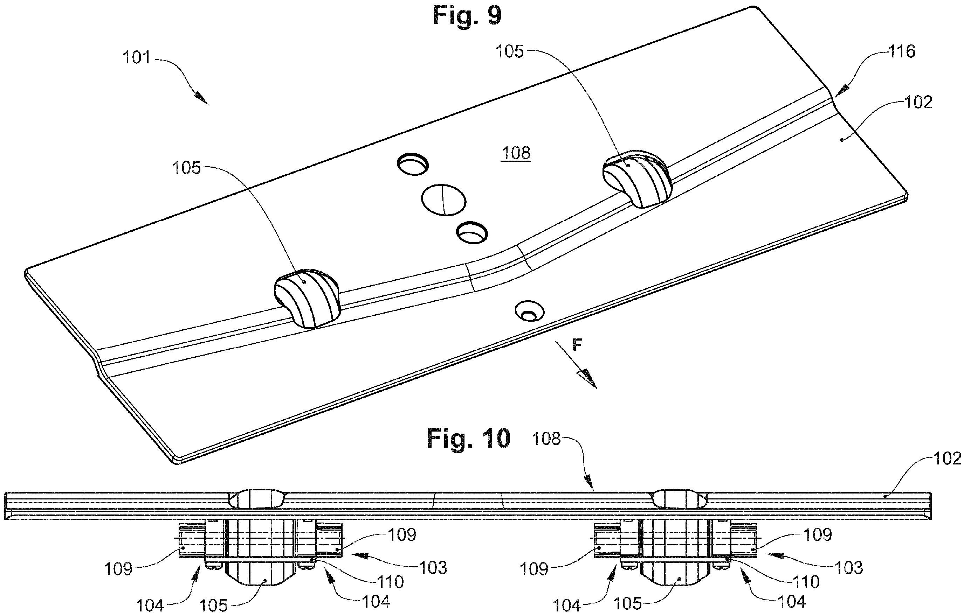

Die **Figur 1** zeigt einen Zuförderer 1 eines Fördersystems. Der Zuförderer 1 ist als Förderer mit einer geschlossener Förderstrecke ausgebildet und weist ein umlaufendes Förderorgan 101 mit einem flächenförmigen Förderelement 102 auf. Das flächenförmige Förderelement 102 bildet eine Hauptfläche 108 aus, über welcher das Fördergut 20 gefördert wird (siehe auch Figuren 9 bis 14). Das Förderorgan 101 wird weiter unten anhand der Figuren 9 bis 14 noch ausführlich beschrieben.

Der Zuförderer 1 umfasst Förderbehälter 10 in Form von Förderschalen zur Aufnahme von Fördergütern 20, welche dem Förderorgan 101 verbindungsfrei aufliegen.

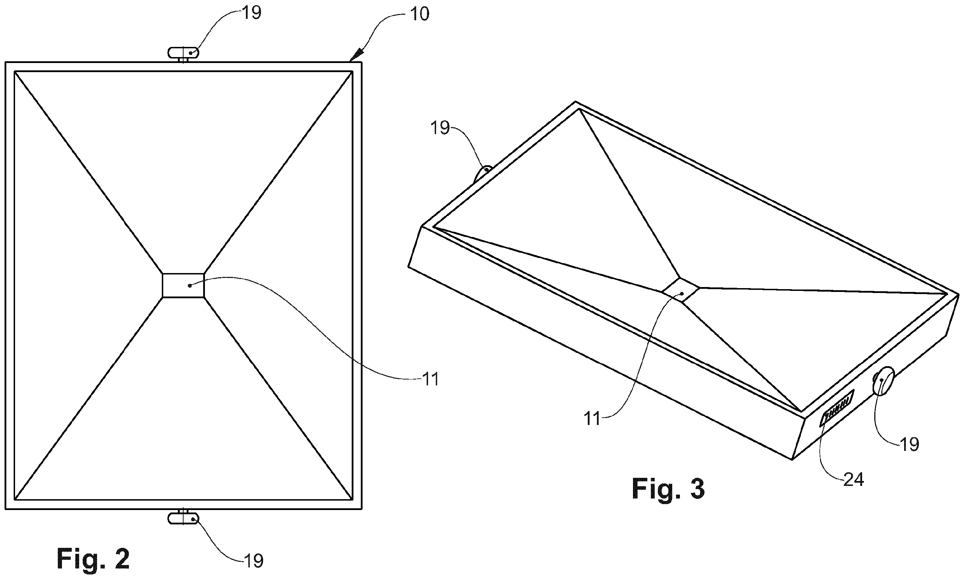

Die Förderschalen 10 bilden jeweils eine Vertiefung 11 zur Aufnahme der Fördergüter 20 auf. Dank der Vertiefung 11 werden die Fördergüter 20 seitlich gehalten (siehe auch **Figur 2 und 3****).**

Die Vertiefung 11 weist zu den Seiten hin einen kontinuierlichen, rampenartigen Anstieg auf. Dieser begünstigt das Herausgleiten der Fördergüter 20 aus der Vertiefung 11 bei geneigter Förderschale 10.

An den Kurzseiten der Förderschalen 10 sind im Weiteren vorstehende Führungselemente 19 angeordnet, über welche die Förderschalen 10 entlang des weiter unten noch beschriebenen Neigemechanismus 6 geführt werden können. Es können jeweils eines oder mehrere Führungselemente 19 an der Förderschale befestigt sein, insbesondere an der Kurzseite.

Im Weiteren ist an der Förderschale 10 ein Informationsetikett angebracht, welches Informationen zur Förderschale trägt, z. B. Informationen zur Identifikation der Förderschale oder das Taragewicht der Förderschale 10.

Der Zuförderer 1 bildet eine Beschickungsstrecke 9 aus, entlang welcher mehrere Beschickungsstationen 12 angeordnet sind, an welchen Fördergüter 20, insbesondere Pakete, manuell aus Speicherbehältern 18 entnommen und fortlaufend in die auf dem Förderorgan 101 vorbei geförderten Förderschalen 10 abgelegt werden. Das Förderorgan 101 wird hierzu kontinuierlichen angetrieben.

Die Förderschalen 10 mit den Fördergütern 20 werden auf dem Förderorgan 101 in Förderrichtung F an einer Erfassungseinrichtung 13 vorbei gefördert. Die Erfassungseinrichtung 13 ist als optischer Mehrseitenscanner ausgebildet, welcher die Oberfläche der Fördergüter 20 von mehreren Seiten nach Identifikationsinformationen absucht. Die erfassten Identifikationsinformationen werden zur weiteren Verarbeitung einer Steuerungseinrichtung 21 übermittelt.

In der Steuerungseinrichtung 21 werden aus den Identifikationsinformationen Adressdaten ermittelt. Der Vorgang vom Erfassen der Identifikationsinformationen der Fördergüter 20 bis zum Vorliegen der Adressdaten, kann eine halbe bis eine Minute dauern.

Die Förderschalen 10 mit den Fördergütern 20 werden im Anschluss an die Erfassungseinrichtung 13 einer Wägeeinrichtung 14 zugefördert, mittels welcher das Gewicht der Fördergüter 20 bestimmt wird.

Im Anschluss an die Wägeeinrichtung 14 werden die Fördergüter 20 entlang einer Wendelstrecke 15 auf ein höheres Förderniveau gefördert.

Die Wendelstrecke 15 dient unter anderem der Überbrückung der Zeit bis die Adressdaten zu den betreffenden Fördergütern 20 von der Steuerungseinrichtung 21 ermittelt worden sind. Die Fördergüter 20 sollen nämlich erst in den Abgabe bzw. Transferbereich 5 gefördert werden, wenn die Adressdaten der Fördergüter 20 ermittelt sind bzw. wenn feststeht, dass zu einem Fördergut 20 keine Adressdaten ermittelt werden konnten.

An die Wendelstrecke 15 schliesst eine geradlinige Staustrecke 2 an, entlang welcher die Fördergüter 20 bis zu ihrer Entlassung in Richtung Transferbereich 5 zurückgehalten, d.h. gepuffert werden.

Hierzu ist in Förderrichtung F betrachtet am Ende der Staustrecke 2 eine Entlassungseinrichtung 3 vorgesehen, welche von der Steuerungseinrichtung 21 gesteuert wird, und mittels welcher die Fördergüter 20 einzeln aus der Staustrecke 2 in Richtung Transferbereich 5 entlassen werden können.

Die Staustrecke 2 dient folglich dem Puffern der Fördergüter 20 vor dem Transferbereich 5. Das Puffern der Fördergüter 20 bezweckt einerseits eine gesteuerte Abgabe von Fördergütern 20 in Richtung Transferbereich 5 und anderseits soll der Puffer einen regelmässigen Nachschub an Fördergütern 20 gewährleisten, welche dem Transferbereich 5 zuzuführen sind.

Da die Fördergüter 20 entlang der Staustrecke 2 angehalten bzw. mit einer wesentlich niedrigeren Geschwindigkeit gefördert werden als die Fördergeschwindigkeit des Förderorgans 101, sind Mittel vorgesehen, welche die Förderung der Fördergüter 20 entlang der Staustrecke 2 von der Fördergeschwindigkeit des Förderorgans 101 entkoppeln. Diese Mittel sind weiter unten im Zusammenhang mit der Beschreibung des Förderorgans 101 noch näher erläutert.

Wie bereits erwähnt, ist am Ende der Staustrecke 2 eine Entlassungseinrichtung angeordnet, mittels welcher die Fördergüter 20 einzeln aus der Staustrecke 2 entlassen werden.

Die aus der Staustrecke 2 entlassenen Fördergüter 20, werden in einen, vor dem Abgabe- bzw. Transferbereich 5 angeordneten Beschleunigungsstreckenabschnitt 4 gefördert, entlang welcher die Fördergüter 20 beschleunigt und mit einer von der Fördergeschwindigkeit des Förderorgans 101 abweichenden, variablen Geschwindigkeit zum Abgabereich 5 hin gefördert werden.

Entlang des Beschleunigungsstreckenabschnittes 4 ist hierzu, wie weiter unten noch näher erläutert, eine Beschleunigungseinrichtung 119 vorgesehen, welche die Förderung der Fördergüter 20 entlang des Beschleunigungsstreckenabschnittes 4 von der Fördergeschwindigkeit des Förderorgans 101 entkoppeln.

Die Beschleunigung bzw. die Geschwindigkeit der Fördergüter 20 entlang des Beschleunigungsstreckenabschnittes 4 wird über die Steuerungseinrichtung 21 gesteuert. Der Beschleunigungsstreckenabschnitt 4 dient dazu, die Förderbehälter 10 mit den Fördergütern 20 auf die Fördergeschwindigkeit eines als Wegförderer ausgebildeten Kippschalensorters 61 zu beschleunigen und jeweils in eine taktsynchrone Förderung mit Kippschalen 62 eines als Wegförderers ausgebildeten Kippschalensorters 61 zu bringen, an welchen die Fördergüter 20 abgegeben werden sollen.

Das heisst, die Förderschalen 10 des Zuförderers 1, 1' werden entlang des Beschleunigungsstreckenabschnittes 4 derart beschleunigt und mit einer Fördergeschwindigkeit bewegt, dass diese taktsynchron mit den Kippschalen 62 des Kippschalensorters 61 in den Transferbereich 5 gefördert werden und mit Kippschalen 62 so genannten Transferpaarungen ausbilden.

In der Transferpaarung ist zwecks Transfer der Fördergüter 20 in Förderrichtung F betrachtet jeweils eine Förderschale 10 des Zuförderers 1, 1' neben einer Kippschale 62 des Kippschalensorters 61 angeordnet.

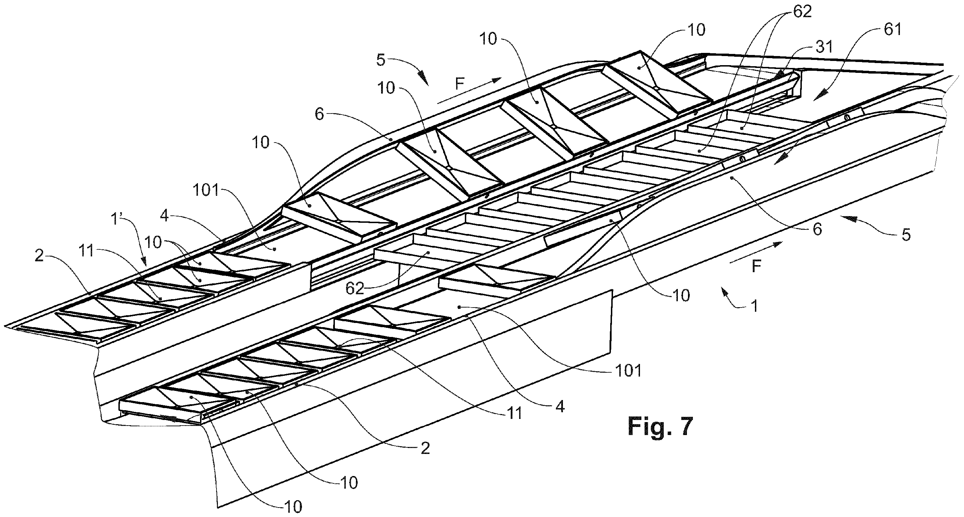

Die Förderbahn der Förderschalen 10 des Zuförderers 1 und die Förderbahn der Kippschalen 62 des wegfördernden Kippschalensorters 61 verlaufen entlang des Beschleunigungsstreckenabschnittes 4 parallel nebeneinander. Die Förderschalen 10 des Zuförderers 1 und die Kippschalen 62 des Kippschalensorters 61 bewegen sich entsprechend gleichgerichtet entlang des Beschleunigungsstreckenabschnittes 4 (siehe auch Figur 7).

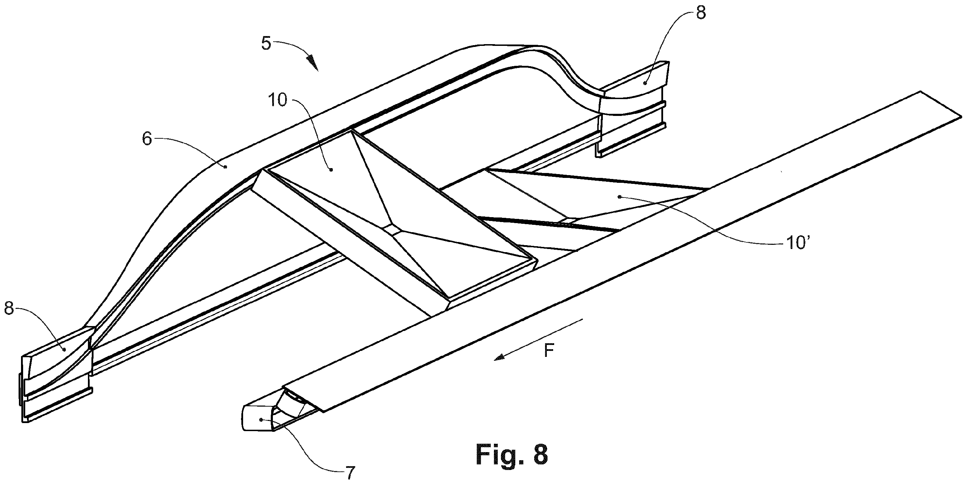

Im Transferbereich 4 ist ein Neigemechanismus 6 angeordnet, welche die Förderschalen 10 zwecks Abgabe der Fördergüter 20 an einen Wegförderer 61 in eine in Förderrichtung F betrachtet seitlich geneigte Lage bewegt. Hierzu wird die Förderschale 10 an der entsprechenden Kurzseite über eine Kulissenführung angehoben (siehe auch **Figur 7** **und** **8**). Die Kulissenführung wirkt dabei mit dem bereits oben erwähnten Führungselement 19 an der Kurzseite der Förderschale 10 zusammen. Das heisst, die Kulissenführung bildet eine Führungsbahn für das Führungselement 19 aus.

Bei diesem Vorgang wird die Förderschale 10 vom Förderorgan 101 abgehoben, so dass das sich unterhalb der Förderschale 10 in Förderrichtung F fortbewegende Förderorgan 101 für die betreffende Förderschale 10 im Bereich des Neigemechanismus 6 nicht mehr förderwirksam ist.

Die der angehobenen Kurzseite der Förderschale 10 gegenüber liegende, tiefer liegende zweite Kurzseite bzw. das an dieser Kurzseite angeordnete Führungselement 19 der Förderschale 10 wird zwecks Antreiben der Förderschale 10 in Förderrichtung F durch den Transferbereich 5 mit einem Förderantrieb 7 des Neigemechanismus 6 in Kontakt gebracht.

Der Förderantrieb 7 umfasst einen umlaufenden Förderriemen, welcher die Förderschalen 10 anstelle des sich unterhalb der Förderschalen 10 in Förderrichtung F weiter bewegenden Förderorgans 101 entlang des Neigemechanismus 6 in Förderrichtung F weiterfördert.

Die Förderbahn der Förderschalen 10 des Zuförderers 1 und die Förderbahn der Kippschalen 62 des wegfördernden Kippschalensorters 61 verlaufen im Transferbereich 5 parallel nebeneinander. Die Förderschalen 10 des Zuförderers 1 und die Kippschalen 62 des Kippschalensorters 61 bewegen sich entsprechend gleichgerichtet durch den Transferbereich 5 (siehe auch Figur 7).

Sobald nun die Förderschale 10 entlang des Neigemechanismus 6 eine ausreichende Schräglage bzw. Neigung erreicht haben, rutscht das Fördergut 10 aus der Vertiefung 11 der Förderschale 10 heraus und gleitet in die benachbarten Kippschale 62 der Transferpaarung ab.

Nach der Abgabe der Fördergüter 20 aus den Förderbehältern 10 werden diese entlang des Neigemechanismus 6 über die Kulissenführung wieder in eine nicht schräg gestellte Lage bewegt und auf dem sich unterhalb der Förderschalen 10 vorbeibewegenden Förderorgan 101 abgelegt. Die Förderschalen 10 verlassen mit dem Ablegen auf das Förderorgan 101 den Neigemechanismus 6 und werden fortan wieder durch das Förderorgan 101 gefördert.

Eingangs des Neigemechanismus 6 ist eine Weiche 8 angeordnet, welche mit der Steuerungseinrichtung 21 verbunden ist (siehe Figur 8). Die Weiche 8 kann zwischen zwei Positionen geschaltet werden, welche erlauben die Förderschalen 10 des Zuförderers 1, 1' wahlweise über die schräg stellende Kulissenführung des Neigemechanismus 6 oder weiterhin dem Förderorgan 101 - ohne Schrägstellung - aufliegend weiter zu fördern. Entsprechend wird von dieser Förderschale 10' auch kein Fördergut 20 abgegeben.

Die Förderschale 10' kann beispielsweise dem Förderelement 101 aufliegend am Neigemechanismus vorbei gefördert werden, wenn diese kein Fördergut enthält oder wenn das in der Förderschale 10' geförderte Fördergut 20 nicht abgegeben werden soll.

Dies kann z. B. der Fall sein, wenn die Adresse des Fördergutes 20 nicht ermittelt werden konnte, weil die dazugehörigen Identifikationsinformationen auf dem Fördergut 20 durch die Erfassungseinrichtung 13 nicht auslesbar oder nicht vorhanden waren oder diese sich auf einer dem Förderorgan 101 aufliegenden, der Erfassungseinrichtung 13 nicht zugänglichen Unterseite des Fördergutes 20 befinden.

Die Förderschalen 10 werden im Anschluss an den Transferbereich 5 entlang einer Rampe wieder auf das tiefere Förderniveau der Beschickungsstrecke 9 gefördert und in die Beschickungsstrecke 9 zurückgefördert.

In Förderrichtung F betrachtet nach dem Transferbereich 5 und vor der Beschickungsstrecke 9 wird eine weitere Staustrecke 17 ausgebildet, entlang welcher die Förderschalen 10 gestaut werden können. Die Förderschalen 10 können auf diese Weise dosiert aus der Staustrecke 17 in die Beschickungsstrecke 9 entlassen werden, wo diese erneut manuell mit Fördergütern 20 beschickt werden. Ein neuer Arbeitszyklus kann beginnen.

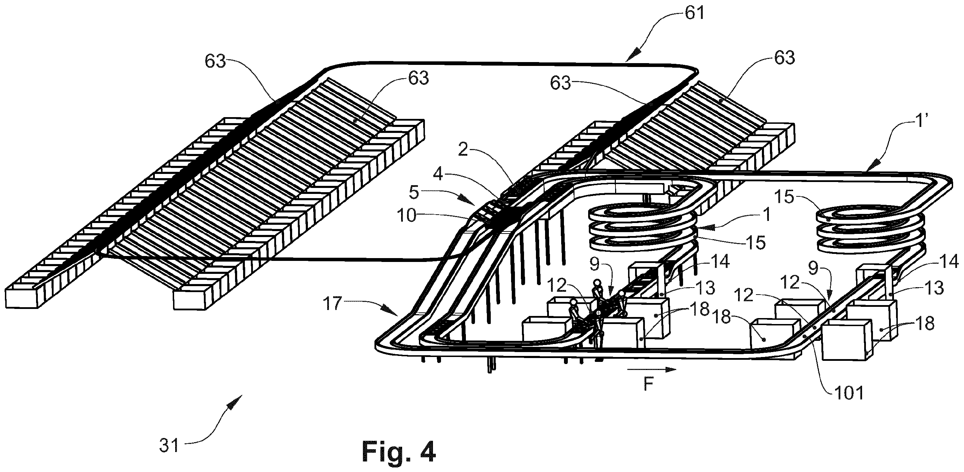

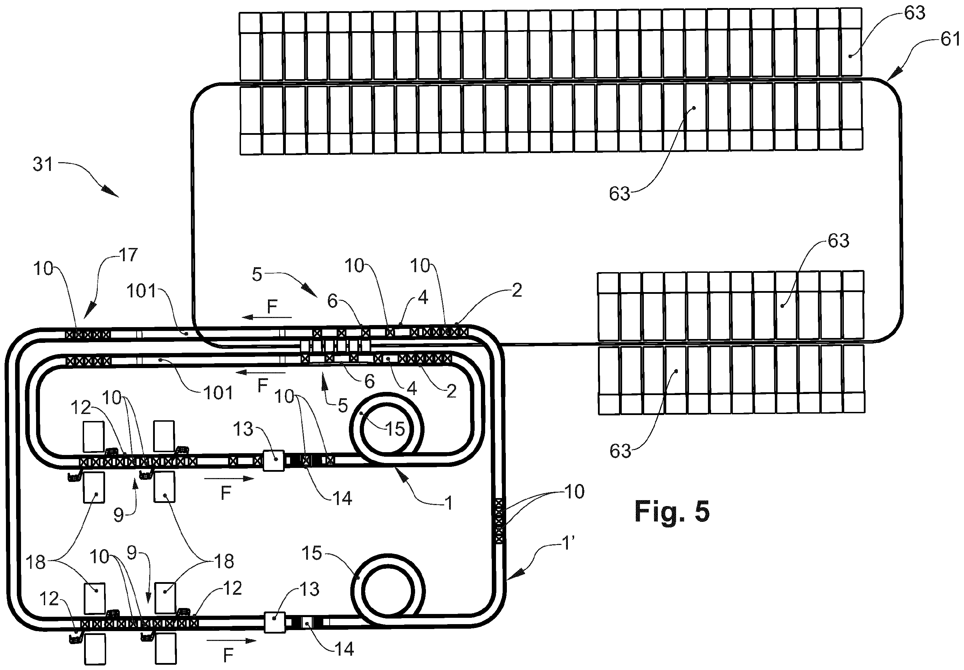

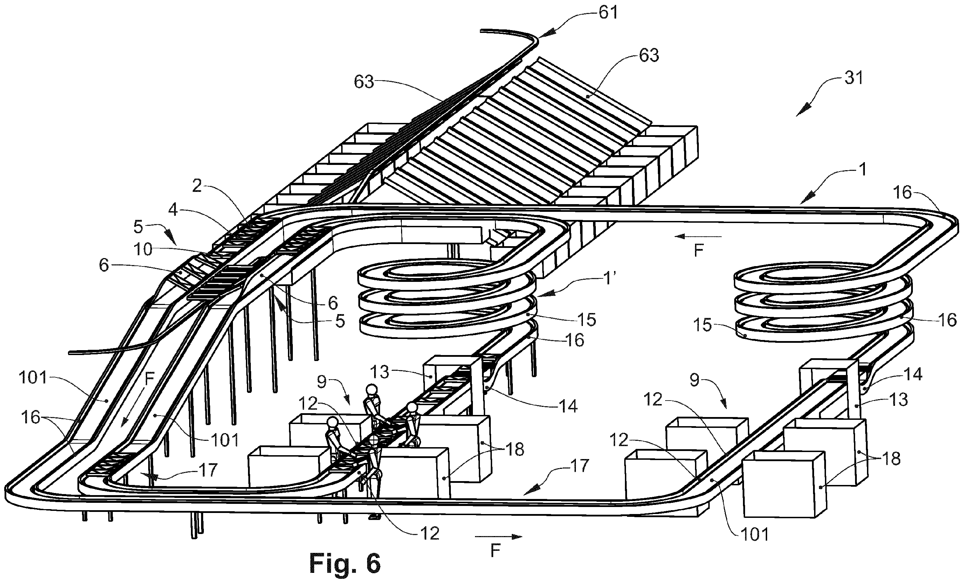

Die **Figuren 4 bis 6** zeigen ein Fördersystem 31 in verschiedenen Ansichten. Das Fördersystem 31 umfasst zwei Zuförderer 1, 1' der oben beschriebenen Art. Das heisst, die beiden Zuförderer 1, 1' weisen grundsätzlich denselben Aufbau auf. Allerdings weicht die Führung der Förderstrecke der beiden Zuförderer 1, 1' voneinander ab.

Im Weiteren umfasst das Fördersystem 31 einen als Kippschalensorter ausgebildeten Wegförderer 61. Der Kippschalensorter 61 bildet eine umlaufende Förderstrecke aus, entlang welcher so genannte Kippschalen 62 zur Förderung der Fördergüter 20 bewegt werden. Die Kippschalen 62 sind in gleichmässigen Abständen zueinander an einem an dieser Stelle nicht näher beschriebenen, kettenartig zusammenhängenden Förderorgan befestigt. Das Förderorgan ist angetrieben und bewegt die Kippschalen 62 entlang der Förderstrecke.

Die Kippschalen 62 des Kippschalensorters 61 weisen jeweils ein Gelenk auf, über welches diese zwecks Ausschleusen der Fördergüter 20 in Förderrichtung F betrachtet zur Seite hin geschwenkt werden können.

Entlang der Förderstrecke des Kippschalensorters 61 sind eine Vielzahl von Ausschleusstationen 63 zum gesteuerten Ausschleusen der Fördergüter 20 aus dem Sorter 61 gemäss definierten Sortierregeln angeordnet.

Der Kippschalensorter 61 und die beiden Zuförderer 1, 1' bilden einen Transferbereich 5 aus, welcher den Abgabebereich des Zuförderers 1 gemäss Figur 1 miteinschliesst.

Die Förderbahnen des Kippschalensorters 61 und der beiden Zuförderer 1, 1' verlaufen sowohl im Transferbereich 5 als auch entlang der unmittelbar stromaufwärts angeordneten Beschleunigungsstreckenabschnitte 4 der Zuförderer 1, 1' parallel zueinander. Die Förderbahn des Kippschalensorters 61 verläuft sowohl entlang der Beschleunigungsstreckenabschnitte 4 des Zuförderers 1, 1' als auch im Transferbereich 5 zwischen den Förderbahnen der beiden Zuförderer 1, 1'.

Die beiden Zuförderer 1, 1' weisen im Transferbereich 4 jeweils einen oben beschriebene Neigemechanismus 6 auf, welche einander gegenüber liegend angeordnet sind, derart, dass die Förderschalen 10 der Zuförderer 1, '1 gegeneinander, d.h. zur dazwischen verlaufenden Förderbahn des Kippschalensorters 61 hin geneigt werden (siehe **Figur 7**).

Die Kippschalen 62 des Kippschalensorters 61 können auf diese Weise von zwei Seiten mit Fördergütern beschickt werden. Das heisst, im Regelbetrieb wird jede zweite Kippschale 62 des Kippschalensorters 61 von einer ersten Seite und jede zweite um eins versetzte Kippschale 62 des Wegförderers 61 von einer zweiten Seite mit einem Fördergut 20 beschickt.

Diese Anordnung rührt daher, dass der Kippschalensorter 62 mit einer rund doppelt so hohen Verarbeitungskapazität betrieben werden kann als die Zuförderer 1, 1', welche wie erwähnt manuell mit Fördergütern 20 beschickt werden müssen.

Im vorliegenden Fall werden die Kippschalen 61 des Kippschalensorters 61 entsprechend mit einer rund doppelt so hohen Geschwindigkeit angetrieben wie das Förderorgan 101 der Zuförderer 1, 1'.

Durch die Abgabe von Fördergütern 20 von zwei parallel betriebenen Zuförderern 1, 1' kann die Verarbeitungskapazität des Kippschalensorters 61 voll ausgeschöpft werden.

Entsprechend sind im Transferbereich 5 die Förderschalen 10 jeweils eines Zuförderers 1, 1' mit jeder zweiten Kippschale 62 des Kippschalensorters 61 gepaart. Die Förderschalen 10 der Zuförderer 1, 1' weisen im Transferbereich 5 gegenüber den Kippschalen 62 folglich jeweils den doppelten Abstand zueinander auf.

Die Förderschalen 10 werden zur Ausbildung der oben genannten Anordnung im Transferbereich 5 entlang der Beschleunigungsstreckenabschnitte 4 im Anschluss an die Staustrecke 2 entsprechend beschleunigt und unter Ausbildung von Transferpaarungen in eine taktsynchrone Förderung mit den Kippschalen 62 gebracht.

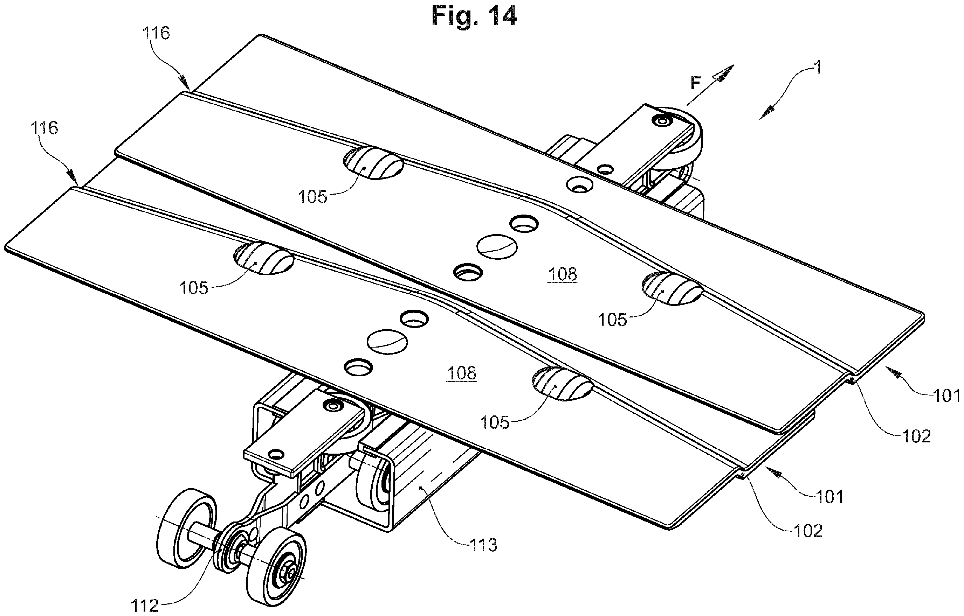

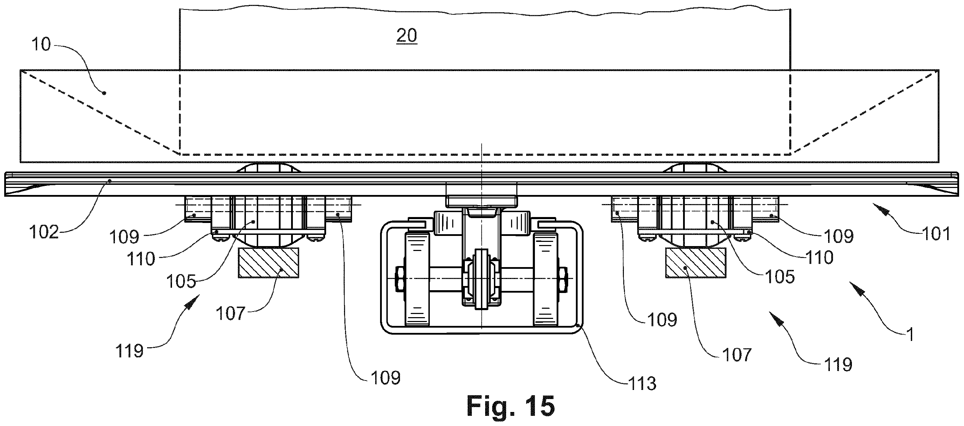

Die Figuren 9 bis 13 zeigen ein Ausführungsbeispiel eines Förderorgans 1 eines Zuförderers 1. Die Figuren 14 und 15 zeigen Teile eines Ausführungsbeispiels eines Zuförderers 1.

Die **Figur 9** zeigt eine Baugruppe eines Förderorgans 101 wie es im Zuförderer 1, 1' gemäss den Figuren 1 bis 8 eingesetzt wird. Die Baugruppe umfasst ein plattenartiges Förderelement 102, welches eine Breite quer zur Förderrichtung F von rund 40 cm aufweist.

Das Förderelement 102 ist auf seiner oberen Seite stufig ausgebildet. Eine Stufe 116 des Förderelements 102 ist quer zur Förderrichtung F mit einem Knick, also v-förmig ausgebildet und verbindet auf der oben liegenden Seite des Förderelements 102 eine tiefer liegende Fläche und eine höher liegende Fläche, wobei die höher liegende Fläche Teil einer Hauptfläche 108 des Förderorgans 101 ist. Auf diese Hauptfläche 108 kann das zu fördernde Gut 20 zu liegen kommen. Im Regelfall wird das zu fördernde Gut 20 aber ausschliesslich auf den Rollen 105 am Förderelement 102 zu liegen kommen.

Die tiefer liegende Fläche der oberen Seite des Förderelements 102 wird in der Anwendung des Förderorgans 101 in einem Zuförderer 1 von einem Teil eines benachbarten Förderelements 102 mindestens teilweise überdeckt. Die Förderorgane 101 sind auf diese Weise ausgebildet, damit benachbarte Förderorgane 101 überlappen können. Dadurch wird eine sich entlang des Förderorgans 101 erstreckende Hauptfläche 108 ausgebildet.

Das Förderorgan 101 ist insbesondere Teil eines Plattenkettenförderers.

Die v-Form der Stufe 116 erlaubt dabei eine quer zur Förderrichtung F ausgerichtete Drehung (eine in einer die Hauptfläche 108 umfassenden Ebene liegende Drehung, ein sogenannter Seitenbogen) von benachbarten Förderorganen 101 relativ zueinander.

Die Stufe 116 im Förderelement 102 ist in Förderrichtung F schräg ausgebildet und weist abgesehen von abgerundeten Kanten eine Neigung von 45 Grad auf.

Das Förderelement 102 weist in der Hauptfläche 108 zwei Öffnungen auf, durch welche von unterhalb der Hauptfläche 108 je eine Rolle 105 durch das Förderelement 102 hindurch nach oben ragt. Die Öffnungen liegen in Förderrichtung F betrachtet etwa in der Mitte des Förderelements 102. Quer zur Förderrichtung F sind beide Öffnungen über die Breite des Förderelements 102 verteilt. Die Rollen 105 teilen das Förderelement 102 quer zur Förderrichtung F somit in drei Abschnitte auf.

Die **Figur 10** zeigt eine Ansicht der Baugruppe von vorne, also gegen die Förderrichtung F betrachtet. Die beiden Rollen 105 sind von jeweils einem Rollenmechanismus 103 umfasst und befinden sich in einer Arretierstellung. Beide Rollenmechanismen 103 sind jeweils unterhalb der Hauptfläche 108 angeordnet. Zusätzlich zu einer Rolle 105 umfasst jeder der beiden Rollenmechanismen 103 eine Rollenhalterung 104 und eine Arretiervorrichtung 110. Die Rollenhalterung 104 umfasst dabei zwei Achshalterungen 109, welche die Achse 106 der Rolle 105 beidseitig der Rolle 105 halten.

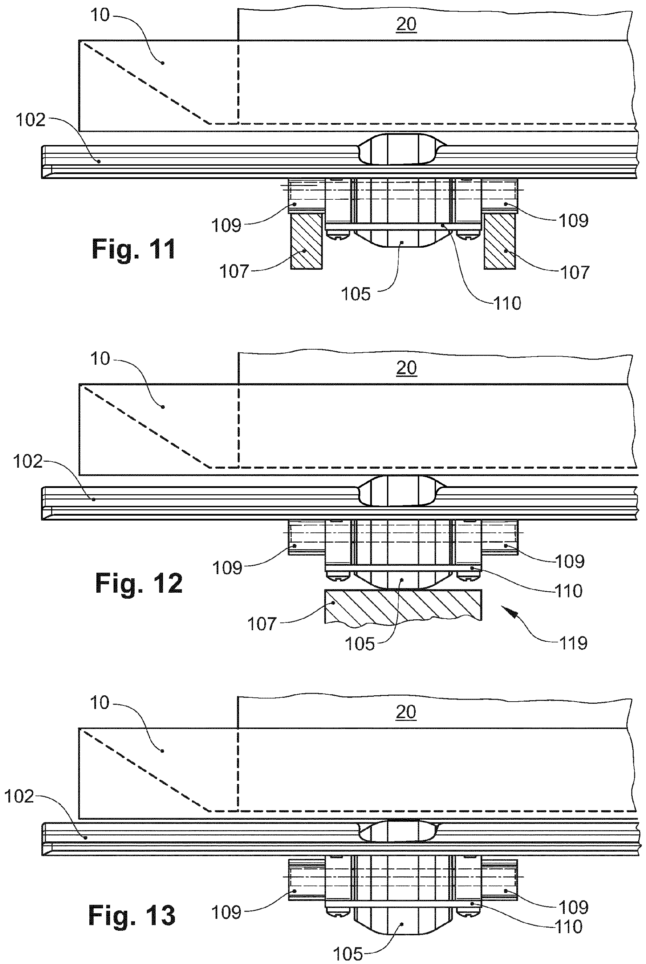

In **Figur 11** ist ein Ausschnitt einer Ansicht des Förderorgans 101 von vorne dargestellt, wobei sich eine Rolle 105 in Freilaufstellung befindet. Zudem ist in Figur 11 das Fördergut 20 dargestellt, welches in einer Förderschale 10 angeordnet ist, die auf der Lauffläche einer Rolle 105 aufliegt. Die Förderschale 10 wird durch Kontakt mit den Rollen 105 gefördert.

Die Freilaufstellung der Rolle 105 in Figur 11 wird erreicht, indem die beiden Stellmittel 107, welche als separate Kulissen ausgebildet sind, die Achshalterungen 109 der Rolle 105 von unten stützen und gegen oben an den oberen Anschlag drücken. Die Achshalterungen 109 liegen also auf den Stellmitteln 107 auf und werden dadurch nach oben gegen das Förderelement 102 gedrückt, welches dafür obere Anschläge ausgebildet hat. In dieser Position befindet sich die Rolle 105 in Figur 11 in der Freilaufstellung, kann also frei drehen.

Die Förderschalen 10 können somit über die als Linearlager des Förderorgans 101 wirkenden Rollen 105 in Freilaufstellung mit wenig Kraftaufwand relativ zum Förderorgan 101 bewegt werden. Das Förderorgan 101 kann beispielsweise unter den Förderschalen 10 mit dem Fördergut 20 bewegt werden, ohne dass eine grosse Krafteinwirkung auf die Förderschalen 10 erfolgt. Mit anderen Worten ist eine Übertragung einer Bewegungsenergie des Förderorgans 101 auf die Förderschalen 10 mit den Rollen 105 in Freilaufstellung vernachlässigbar.

Entsprechend werden die Rollen 105 des Förderorgans 101 entlang der Staustrecken 2, 17 in einer Freilaufstellung gehalten, damit das Förderorgan 101 unterhalb der Förderschalen 10 hindurch bewegt werden kann, ohne dass diese eine merkliche Mitnahmekraft auf die aufgestauten Förderschalen 10 ausüben. Dadurch werden hohe Reibungskräfte zwischen dem Förderorgan 101 und den zurückgestauten Förderschalen 10 verhindert.

In **Figur 12** ist ein Ausschnitt analog zu Figur 11 dargestellt, allerdings mit der Rolle 105 in Antriebstellung. Im Gegensatz zu Figur 11 weist Figur 12 eine Abrollführung auf. Die Abrollführung 117 ist zwar ebenfalls als Kulisse ausgebildet, allerdings bildet die Kulisse auf seiner nach oben gerichteten Seite eine Abrollfläche aus, auf welcher die Lauffläche der Rolle 105 von oben aufliegt. Die Abrollführung 117 stützt somit die Rolle 105 von unten und treibt die Rolle 105, welche zusammen mit dem Förderorgan 101 über die Abrollführung 117 hinweg bewegt wird, dadurch an.

Die Abrollfläche ist eben und parallel zur Hauptfläche 108 ausgerichtet. Die Abrollführung 117 greift dabei an der Rolle 105 am weitest von der Rollenachse 106 entfernten Punkt an, ebenso wie die Förderschalen 10 auf der gegenüberliegenden Seite der Rolle 105. Die Übersetzung des Antriebs beträgt also 1, was bedeutet, dass die Geschwindigkeit zwischen Abrollführung 117 und Förderorgan 101 gleich gross ist wie die Geschwindigkeit zwischen den Förderschalen 10 und Förderorgan 101. Die Förderschale 10 bewegt sich also durch die Rolle 105 angetrieben doppelt so schnell relativ zur Abrollführung 117 wie das Förderorgan 101.

Die Abrollführung 117 kann wie in Figur 12 gezeigt ein Abrollelement 118, z. B. in Form eines umlaufenden Antriebsbandes 118 aufweisen. Die Ausführungen oben treffen somit nur auf eine nicht angetriebene Abrollführung zu.

Im Falle eines angetriebenen Abrollelementes 118 können die Rollen 105 mit einer beliebigen Geschwindigkeit und sowohl in als auch entgegen der Förderrichtung des Förderorgans 101 angetrieben werden, so dass die den Rollen 105 aufliegenden Förderschalen 10 eine gegenüber dem Förderorgan 101 höhere oder niedrigere Geschwindigkeit aufweisen oder gar in eine der Förderrichtung F des Förderorgans 101 entgegengesetzte Förderrichtung gefördert werden können.

Grundsätzlich können die Förderschalen 10 mit einer aktiv angetriebenen Abrollführung 117 mit einer von der Geschwindigkeit des Förderorgans 101 unabhängigen Fördergeschwindigkeit betrieben werden.

Abrollführung 117, Abrollelement 118 und Rolle 105 können zusammen als Beschleunigungseinrichtung 119 betrachtet werden.

Die Abrollführung 117 findet Einsatz entlang der Beschleunigungsstreckenabschnitte 4 der Zuförderer 1, 1', entlang welcher die Förderschalen 10 aus der Staustrecke 2 heraus beschleunigt werden, wie oben bereits ausführlich beschrieben.

Die räumliche Position der Rollenachse 106 und damit auch der Rolle 105 ist bei der Freilaufstellung und der Antriebstellung bei der vorliegenden Ausführungsform des Förderorgans 101 identisch, nämlich mit den Achshalterungen 109 am oberen Anschlag anliegend. Die Antriebstellung kann aber auch weiter unten liegen als die Freilaufstellung. Die Freilaufstellung wiederum kann in einer anderen Ausführungsform und/oder Anwendung aber auch weiter unten liegen als die Antriebstellung. Sowohl in der Antriebstellung als auch in der Freilaufstellung kann die Lauffläche der Rolle 105 aber nicht in Kontakt mit der Arretiervorrichtung 110 treten.

**Figur 13** zeigt einen Ausschnitt analog zu Figur 11. Dabei ist die Rolle 105 in Arretierstellung. Die Arretiervorrichtung 110 dient als unterer Anschlag für die Rolle 105, indem die Lauffläche der Rolle 105 in Schwerkraftrichtung auf dieser aufliegen kann.

Die Arretiervorrichtung 110 ist als Metallplatte ausgebildet, welche eine Öffnung aufweist. Diese Öffnung der Arretiervorrichtung 110 ist derart geformt und dimensioniert, dass die Rolle 105 in die Öffnung hineinragen kann und die Lauffläche der Rolle 105 mit Rändern der Öffnung der Arretiervorrichtung 110 in Kontaktschluss treten kann. Ist die Rolle 105 in der Arretierstellung, dann liegt die Lauffläche der Rolle 105 in Schwerkraftrichtung auf der Arretiervorrichtung 110 auf, und die Rolle 105 ragt teilweise durch die Öffnung der Arretiervorrichtung 110 hindurch. Die Arretiervorrichtung 110 ist starr und ortsfest am Förderelement 102 befestigt und beschränkt die Bewegung der Rolle 105 und somit auch der Rollenachse 106 als unterer Anschlag in der Schwerkraftrichtung. Die Arretiervorrichtung 110 ist im vorliegenden Fall auf Stützen aufgeschraubt, welche vom Förderelement 102 ausgebildet sind, und ist parallel zur Hauptfläche 108 angeordnet.

Die Rollenachse 106 ist als Metallstift ausgebildet, um welche die Rolle 105 frei drehend gelagert ist. Die Rollenachse 106 ragt auf beiden Seiten der Rolle 105 aus der Rolle 105 heraus, verläuft dann jeweils durch eine vom Förderelement 102 ausgebildete längliche Öffnung, welche als lineare Gleitführung ausgebildet ist, und endet auf beiden Seiten jeweils in einer Achshalterung 109. Die Rollenachse 106 ist starr und somit drehfest mit den Achshalterungen 109 verbunden. Die vom Förderelement 102 ausgebildete lineare Gleitführung führt die Rollenachse 106 orthogonal zur Hauptfläche 108. Das Förderelement 102 und die Achshalterungen 109 sind aus Kunststoff gefertigt.

Die Arretiervorrichtung 110 dient also als unterer Anschlag für die Rolle 105, indem die Lauffläche der Rolle 105 in Schwerkraftrichtung darauf aufliegen kann. Durch das Gewicht der Rolle und/oder der Förderschalen 10 bzw. des in diesen geförderten Förderguts 20 wirkt die Arretiervorrichtung 110 auf die Rolle 105 selbstarretierend. Die Rollenachse 106 kann durch die lineare Gleitführung in Richtung der Hauptfläche 108 bewegt werden, wobei das Förderelement 102 einen oberen Anschlag für diese Bewegung ausgebildet hat, an welchem die Achshalterungen 109 anschlagen können. Das Förderelement 102 bildet somit einen oberen Anschlag für die Achshalterungen 109 und somit indirekt für die Rollenachsen 106 und die Rollen 105 aus, und in dieser Position befinden sich die Rollen 105 in der Freilaufstellung. Liegen die Rollen 105 am unteren Anschlag auf der Arretiervorrichtung 110 auf, befinden sich die Rollen in der Arretierstellung.

Die Achshalterungen 109, die vom Förderelement 102 ausgebildete lineare Gleitführung für die Rollenachse 106 und die vom Förderelement 102 ausgebildeten oberen Anschläge für die Achshalterungen 109 werden von der Rollenhalterung 104 umfasst.

Die Rollen 105 weisen eine bombierte Form auf. Der Querschnitt der Rollen 105 (also ein Schnitt entlang der Rollenachse 106) weist also eine konvexe Form auf, wobei die Lauffläche der Rollen 105 etwas abgeflacht ist. Die Laufflächen der Rollen 105 sind gummiert, die Rollen 105 selber bestehen aus Kunststoff.

In Figur 13 liegt die Rolle 105 nun auf der Arretiervorrichtung 110 auf und ist in der Arretierstellung. Die Arretierstellung ist die am weitesten unten liegende Stellung der Rolle 105. Durch das Gewicht der Rolle 105 und des zu fördernden Guts 20 wird die Rolle 105 in die Arretiervorrichtung 110 gedrückt, welche somit selbstarretierend funktioniert.

Wirken also keine Stellmittel oder Abrollfährungen auf den Rollenmechanismus 103 ein, so befinden sich die Rollen 105, insbesondere wenn diese durch eine Förderschale 10 belastet sind, in der Arretierstellung. Da die Rollen 105 insbesondere eine Lauffläche mit hohem Reibungskoeffizient aufweisen, wirken diese in der Arretierstellung als Mitnehmer für die Förderschalen 10.

Die Rollen 105 sind folglich entlang von Förderstreckenabschnitten, in welchen die Förderschalen 10 mit der Geschwindigkeit des Förderorgans 101 gefördert werden sollen, in Arretierstellung. Dies ist beispielsweise entlang der Beschickungsstrecke 9 der Fall.

Die **Figur 14** zeigt eine perspektivische Ansicht von oben auf einen Ausschnitt eines Zuförderers 1, 1', welche ein erfindungsgemässes Förderorgan 101 umfasst. Das Förderorgan 101 umfasst eine Mehrzahl von Baugruppen mit jeweils einem flächigen Förderelement 102 und daran angebrachten Rollenmechanismen 103 mit Rollen 105. Ferner umfasst das Förderorgan 101 eine Antriebskette 112, an welcher die Baugruppen über die Förderelemente 102 befestigt sind. Die Förderelemente 102 sind hierzu starr an je einem einzelnen Glied der Antriebskette 112 befestig. Die Antriebskette 112 ist durch einen Kettenkanal 113 geführt, welcher die Antriebskette 112 teilweise umgibt und c-förmig umschliesst. Da die Rollen 105 insbesondere eine Lauffläche mit hohem Reibungskoeffizient aufweisen, wirken diese in der Arretierstellung als Mitnehmer für die Förderschalen 10.

In **Figur 15** ist eine Ansicht von vorne auf einen Ausschnitt des Zuförderers 1,1' aus Figur 14 dargestellt. In Figur 15 sind die Rollen 105 in Antriebstellung dargestellt, wobei eine Abrollführung unter den Rollen 105 positioniert ist, entlang welcher die Rollen 105 abrollen.

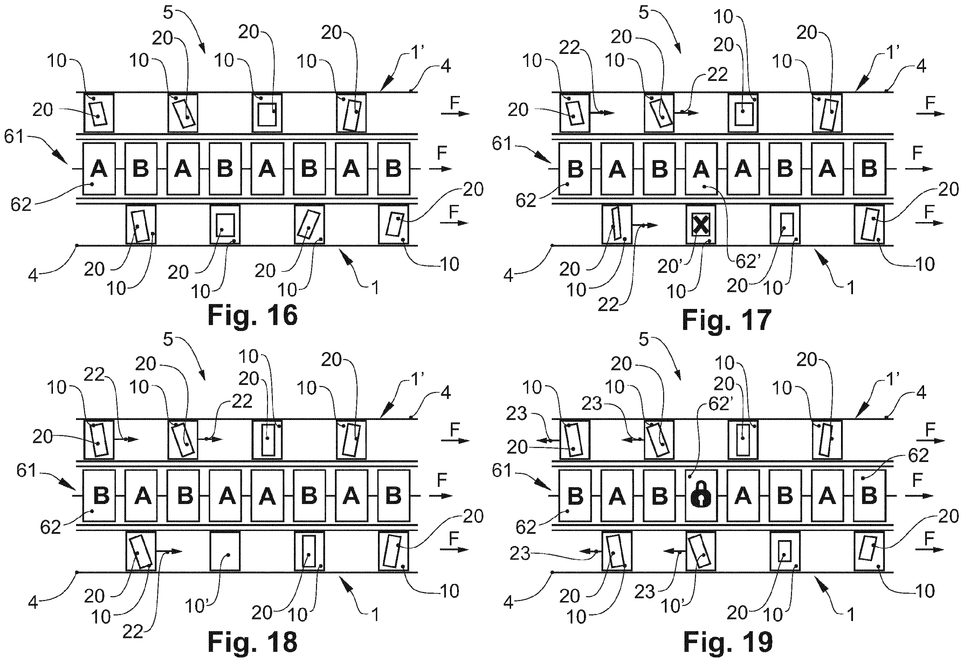

Die **Figuren 16 bis 19** zeigen vier verschiedene Transfersituationen wie sie im Transferbereich 5 eines Fördersystems 31 gemäss den Figuren 4 bis 7 anzutreffen sind und wie sie durch das erfindungsgemässe Verfahren gelöst werden.

Die Anordnung gemäss den Figuren 16 bis 19 zeigt die Förderbahn eines Kippschalensorters 61 mit entlang dieser in regelmässigen Abständen angeordneten Kippschalen 62 unmittelbar vor dem Transferbereich. Beidseits der Kippschalen-Förderbahn und parallel zu dieser verlaufen die Förderbahnen von zwei Zuförderern 1, 1' mit entlang den Zuförderbahnen angeordneten Förderbehältern 10, die mit Fördergütern 20 belegt sind. Die Kippschalen 62 sowie die Förderschalen 10 werden entlang einer gemeinsamen Förderrichtung F bewegt.

Die Transfersituation gemäss **Figur 16** stellt den Regelbetrieb, d.h. den regulären Transferbetrieb dar. Im regulären Transferbetrieb sind einerseits sämtliche in den Transferbereich 4 bewegten Förderschalen 10 der Zuförderer 1, 1' mit einem zu transferierenden Fördergut 20 belegt. Ferner sind sämtliche in den Transferbereich 4 bewegten Kippschalen 62 aufnahmefähig für ein zu transferierendes Fördergut 20.

Wie bereits oben erläutert, werden auf beiden Seiten der Förderbahn des Kippschalensorters 61 Förderschalen 10 der beiden Zuförderer 1, 1' in den Transferbereich gefördert.

Die Förderschalen 10 eines ersten Zuförderers 1 werden entlang des Beschleunigungsstreckenabschnittes 4 beschleunigt, wobei die Förderschalen 10 des ersten Zuförderers 1 mit jeder zweiten Kippschale 62 des Kippschalensorters 61 in eine taktsynchrone Förderung gebracht werden und mit diesen eine Transferpaarung ausbilden. Transferpaarung bedeutet, dass die Kippschale 62 und der Förderbehälter 10 in Förderrichtung F betrachtet nebeneinander angeordnet sind.

Die Förderschalen 10 des zweiten Zuförderers 1' werden entlang des Beschleunigungsstreckenabschnittes 4 ebenfalls beschleunigt, wobei die Förderschalen 10 des zweiten Zuförderers 1' mit jeder zweiten, um eins versetzte Kippschale 62 des Kippschalensorters 61 in eine taktsynchrone Förderung gebracht werden und mit diesen eine Transferpaarung ausbilden.

Die Kippschalen 62 des Kippschalensorters 61 werden auf diese Weise abwechselnd zu beiden Seiten hin mit Förderschalen 10 eines Zuförderers 1, 1' taktsynchron gepaart und paarweise nebeneinander geführt.

Das heisst, bei einer Anordnung von Kippschalen 62 A-B-A-B-A-B entlang der Förderbahn vor dem Transferbereich werden die mit "A" gekennzeichneten Kippschalen 62 mit Förderschalen 10 des ersten Zuförderers 1' und die mit "B" gekennzeichneten Kippschalen 62 mit Förderschalen 10 des zweiten Zuförderers 1' gepaart und paarweise nebeneinander geführt.

Durch Neigen der Förderschalen 10 entlang des Neigemechanismus 6 im Transferbereich 5 werden die Fördergüter 20 an die Kippschalen 62 transferiert, welche mit den abgebenden Förderschalen 10 eine Transferpaarung bilden.

Die **Figur 17** zeigt eine zweite Transfersituation, welche einen nicht mehr unter den Regelbetrieb fallenden, ersten Transfersonderfall darstellt.

Eine zum Transferbereich bewegte Förderschale 10 eines Zuförderers 1 enthält ein Fördergut 20', welches nicht an den Kippschalensorter 61 transferiert, sondern vielmehr zurückgeführt werden soll. Dies kann z. B. dann der Fall sein, wenn die Identifikationsinformationen am besagten Fördergut 20', welche für die Sortierung zwingend sind, nicht ausgelesen werden konnten und das betreffende Fördergut 20' somit nicht sortierbereit ist.

Der betreffende Förderbehälter 10 würde gemäss dem Fördersystem 31 nach Figur 4 bis 7 entsprechend ohne in Neigung versetzt zu werden auf dem Förderorgan 101 durch den Transferbereich gefördert. Dieser Vorgang wurde bereits weiter oben im Zusammenhang mit der Weiche 8 der Transfereinrichtung beschrieben.

Eine Abwicklung dieses Transfersonderfalls nach dem oben beschriebenen Regelbetrieb würde bedeuten, dass die mit der besagten Förderschale 10 gepaarte Kippschale 62' im Transferbereich kein Fördergut 20 empfangen und leer bleiben würde. Dadurch würden allerdings unnötigerweise Förderkapazitäten ungenutzt belassen.

Um eine dadurch entstehende Förderlücke zu vermeiden, werden nun die in Förderrichtung F der betroffenen Kippschale 62' betrachtet nachfolgenden Förderbehälter 10 der beiden Zuförderer 1, 1' beidseits der Kippschalen-Förderbahn jeweils um eine Kippschalen-Position 22 nach vorne repositioniert.

Die Repositionierung erfolgt entlang des Beschleunigungsstreckenabschnitts 4, insbesondere im Anschluss an eine Staustrecke 2. Die Förderbehälter 10 werden entlang des Beschleunigungsstreckenabschnitts 4 in einer von der Fördergeschwindigkeit des Förderorgans 101 unabhängigen, variablen Geschwindigkeit gefördert und können somit beliebig beschleunigt oder verzögert werden. Die Fördergeschwindigkeit entlang des Beschleunigungsstreckenabschnitts wird durch die Steuerungseinrichtung 21 festgelegt.

Bei diesem Vorgang geht die ursprünglich mit der nachfolgenden Kippschale 62 eine Transferpaarung ausbildende, gegenüber liegende Förderschale 10 mit der von der Förderlücke betroffenen Kippschale 62' eine Transferpaarung ein.

Die nachfolgenden Förderschalen auf beiden Seiten der Kippschalen-Förderbahn werden entlang des Beschleunigungsstreckenabschnitts 4 in Förderrichtung jeweils um eine Kippschalen-Position nach vorne repositioniert.

Da die Förderschalen 10 der Zuförderer 1, 1' auf beiden Seiten der Kippschalen-Förderbahn um eine Kippschalen-Position nach vorne repositioniert werden, erstreckt sich der Repositionierungsweg einer Förderschale 10 lediglich über eine Kippschalen-Position.

Würden lediglich die Förderschalen 10 des betroffenen Zuförderers 1 auf einer Seite der Kippschalen-Förderbahn vorgerückt, d.h. nach vorne repositioniert, so müssten diese aufgrund der wechselseitigen Abgabe um insgesamt zwei Kippschalen-Positionen, also um den doppelten Repositionierungsweg, vorgerückt bzw. nach vorne repositioniert werden. Dies würde jedoch wesentlich höhere Anforderungen an den Zuförderer 1 stellen und beispielsweise einen längeren Beschleunigungsstreckenabschnitt 4 notwendig machen.

Die **Figur 18** zeigt eine dritte Transfersituation, welche einen ebenfalls nicht mehr unter den Regelbetrieb fallenden, zweiten Transfersonderfall darstellt. Dieser unterscheidet sich vom zweiten Transfersonderfall gemäss Figur 17 dadurch, dass die betreffende Förderschale 10 anstelle eines nicht zu transferierenden Transportgutes 20' überhaupt kein Transportgut 20 enthält.

Das heisst, auch im zweiten Transfersonderfall haben wir es mit einem Förderbehälter 10 zu tun, aus welchem kein Transportgut 20 an den Kippschalensorter 61 transferiert wird, und welcher entsprechend eine Förderlücke erzeugt.

Entsprechend werden im zweiten Transfersonderfall dieselben Verfahrensschritte wie im ersten Transfersonderfall gemäss Figur 17 durchgeführt.

Die **Figur 19** zeigt eine vierte Transfersituation, welche wiederum einen nicht mehr unter den Regelbetrieb fallenden, dritten Transfersonderfall darstellt. Dieser unterscheidet sich vom ersten und zweiten Transfersonderfall gemäss Figur 17 und 18 dadurch, dass in diesem Fall eine Kippschale 62' kein Fördergut 20 übernehmen kann, während die Förderbehälter 10 der beiden Zuförderer 1, 1' jeweils mit zu transferierenden Fördergütern 20 beladen sind.

Würde nun dieser Transfersonderfall gemäss dem unter Figur 16 beschriebenen Regelbetrieb abgewickelt, so müsste die der nicht aufnahmebereiten Kippschale 62' zugeordnete Förderschale 10 ohne Transfer des Fördergutes 20 durch den Transferbereich gefördert und das nicht transferierte Fördergut 20 zurückgeführt werden. Dadurch würden allerdings unnötigerweise Fördergüter 20 zurückgeführt, welche eigentlich an den Kippschalensorter 61 transferiert werden sollten.

Um dies zu vermeiden, werden die in Förderrichtung F der nicht aufnahmebereiten Kippschale 62' nachfolgenden Förderbehälter 10 der beiden Zuförderer 1, 1' beidseits der Kippschalen-Förderbahn jeweils um einen Kippschalen-Position 23 zurück repositioniert.

Die Repositionierung erfolgt entlang des Beschleunigungsstreckenabschnittes 4, insbesondere im Anschluss an eine Staustrecke 2. Die Förderbehälter 10 werden entlang des Beschleunigungsstreckenabschnittes 4 in einer von der Fördergeschwindigkeit des Förderorgans 101 unabhängigen, variablen Geschwindigkeit gefördert und können somit beliebig beschleunigt oder abgebremst werden. Die Fördergeschwindigkeit entlang des Beschleunigungsstreckenabschnitts wird durch die Steuerungseinrichtung 21 festgelegt.

Bei diesem Vorgang geht die ursprünglich mit der nicht aufnahmebereiten Kippschale 62' eine Transferpaarung ausbildende Förderschale 10 mit der in Förderrichtung F betrachtet nächst nachfolgenden Kippschale 62 eine Transferpaarung ein.

Die nachfolgenden Förderschalen 10 auf beiden Seiten der Kippschalen-Förderbahn rücken in Förderrichtung F betrachtet jeweils um eine Kippschalen-Position zurück.

Da die Förderschalen 10 der Zuförderer 1, 1' auf beiden Seiten der Kippschalen-Förderbahn in Förderrichtung F betrachtet um eine Kippschalen-Position zurück repositioniert werden, umfasst der Repositionierungsweg einer Förderschale 10 lediglich eine Kippschalen-Position.

Würden lediglich die Förderschalen 10 des betroffenen Zuförderers 1, welcher die Transferpaarung mit der nicht aufnahmebereiten Kippschale 62' ausbildet, auf einer Seite der Kippschalen-Förderbahn zurück repositioniert, so müssten diese aufgrund der wechselseitigen Abgabe um insgesamt zwei Kippschalen-Positionen, also um den doppelten Repositionierungsweg, zurück repositioniert werden. Dies würde jedoch wesentlich höhere Anforderungen an den Zuförderer 1 stellen und beispielsweise einen längeren Beschleunigungsstreckenabschnitt 4 notwendig machen.

## Patentansprüche

1. Verfahren zum Transferieren von Fördergütern (20) von mindestens einem Zuförderer (1) an einen Wegförderer (31) in einem Transferbereich (5), wobei der mindestens eine Zuförderer (1) ein entlang einer Zuförderstrecke angetriebenes Förderorgan (101) zum Fördern von Fördergütern (20) in den Transferbereich (5) sowie verbindungsfrei auf dem Förderorgan (101) aufliegende Förderbehälter (10) umfasst, in welchen die Fördergüter (20) in den Transferbereich (5) gefördert werden, und der Wegförderer (31) entlang einer Transferförderstrecke bewegbare Förderbehälter (62) zur Übernahme der von dem mindestens einen Zuförderer (1) abgegebenen Fördergüter (20) enthält, wobei die in den Förderbehältern (10) geförderten und über die Förderbehälter (10) dem Förderorgan (101) aufliegenden Fördergüter (20) entlang der Zuförderstrecke zum Transferbereich (5) hin über eine Beschleunigungseinrichtung (119) relativ zum Förderorgan (101) beschleunigt und zwecks Abgabe der Fördergüter (20) in eine taktsynchrone Nebeneinanderförderung mit einem Förderbehälter (62) des Wegförderers (61) gebracht und im Transferbereich (5) an den Wegförderer (31) transferiert werden,
wobei der mindestens eine Zuförderer (1, 1') im Transferbereich (5) eine Transfereinrichtung mit einem Neigemechanismus (6) enthält, mittels welchem Förderbehälter (10) des Zuförderers (1, 1') während ihrer Förderung entlang der Zuförderstrecke zwecks Abgabe von Fördergütern (20) an die Förderbehälter (62) des Wegförderers (61) in Förderrichtung (F) betrachtet zur Seite geneigt werden,
wobei der Neigemechanismus (6) die Förderbehälter (10) mindestens teilweise vom Förderorgan (101) abhebt, und wobei der Neigemechanismus (6) einen Förderantrieb (7) enthält, mittels welchem die Förderbehälter (10) entlang des Neigemechanismus (6) in Förderrichtung (F) unabhängig vom Förderorgan (101) gefördert werden.

2. Verfahren nach Anspruch 1, **dadurch gekennzeichnet, dass** im Transferbereich (5) entlang der Transferförderstrecke des Wegförderers (31) in Förderrichtung (F) betrachtet auf beiden Seiten jeweils eine Zuförderstrecke eines Zuförderers (1, 1') verläuft, und Fördergüter (20) abwechselnd von beiden Seiten in Förderbehälter (62) des Wegförderers (61) transferiert werden.

3. Verfahren nach Anspruch 2, **dadurch gekennzeichnet, dass** im Regelbetrieb jeder zweite Förderbehälter (62) des Wegförderers (61) von einer ersten Seite und jeder zweite um eins versetzte Förderbehälter (62) des Wegförderers (61) von einer zweiten Seite mit einem Fördergut (20) beschickt wird.

4. Verfahren nach einem der Ansprüche 2 bis 3, **dadurch gekennzeichnet, dass** bei Vorliegen eines nicht transferbereiten Förderbehälters (10') eines Zuförderers (1, 1'), aus welchem kein Fördergut (20') transferiert werden soll oder kann, dem nicht transferbereiten Förderbehälter (10') in Förderrichtung (F) nachfolgende Förderbehälter (10) auf beiden Zuförderstrecken mittels der Beschleunigungseinrichtung (119) in Förderrichtung (F) um eine Förderbehälter-Position des Wegförderers (61) nach vorne repositioniert werden.

5. Verfahren nach einem der Ansprüche 2 bis 3, **dadurch gekennzeichnet, dass** bei Vorliegen eines nicht transferbereiten Förderbehälters (62') des Wegförderers (61), in welchen kein Fördergut (20) transferiert werden kann, der mit dem nicht transferbereiten Förderbehälter (62') eine Transferpaarung ausbildende Förderbehälter (10) eines Zuförderers (1, 1') sowie diesem in Förderrichtung (F) auf beiden Zuförderstrecken in Förderrichtung (F) nachfolgende Förderbehälter (10) der Zuförderer (1, 1') mittels der Beschleunigungseinrichtung (119) in Förderrichtung (F) um eine Förderbehälter-Position des Wegförderers (61) zurück repositioniert werden.

6. Verfahren nach einem der Ansprüche 1 bis 5, **dadurch gekennzeichnet, dass** das Förderorgan (101) des mindestens einen Zuförderers (1, 1') eine dem Fördergut (20) zugewandte, die Förderstrecke definierende, bahnförmige Hauptfläche (108) ausbildet und das Förderorgan (101) mindestens ein Förderelement (102) umfasst, welches mindestens einen Teil der Hauptfläche (108) ausbildet.

7. Verfahren nach Anspruch 6, **dadurch gekennzeichnet, dass** das Förderorgan (101) über eine Rollenhalterung (104) an dem mindestens einen Förderelement (102) um Rollenachsen (106) drehbar gelagerte Rollen (105) enthält, wobei die Rollen (105) mindestens teilweise über die Hauptfläche (108) des Förderelementes (102) hinausragen, so dass die Förderbehälter (10) des mindestens einen Zuförderers (1, 1') den Rollen (105) aufliegen.

8. Verfahren nach Anspruch 7, **dadurch gekennzeichnet, dass** die Rollen (105) entlang der Zuförderstrecke zum Beschleunigen der Fördergüter (20) bzw. der Förderbehälter (10) relativ zum Förderorgan (101) in einer Antriebsstellung über die Beschleunigungseinrichtung (119) angetrieben werden.

9. Verfahren nach einem der Ansprüche 1 bis 8, **dadurch gekennzeichnet, dass** das Förderorgan (101) über eine Rollenhalterung (104) an dem wenigstens einen Förderelement (102) um Rollenachsen (106) drehbar gelagerte Rollen (105) enthält, welche wahlweise den Zustand einer Freilauflaufstellung, einer Arretierstellung oder einer Antriebsstellung einnehmen können, wobei die Rollen (105) mindestens teilweise über die Hauptfläche (108) des Förderelementes (102) hinausragen, so dass die Förderbehälter (10) den Rollen (105) aufliegen.

10. Verfahren nach einem der Ansprüche 7 bis 9, **dadurch gekennzeichnet, dass** die Rollen (105) mittels Wirkelementen (107, 117) jeweils zwischen wenigstens zwei räumlich unterschiedlichen Positionen bewegbar sind, in welchen die Rollen (105) unterschiedliche Zustände aus der Gruppe Zuständen, umfassend die Arretierstellung, Freilaufstellung und Antriebsstellung, einnehmen.

11. Verfahren nach Anspruch 10, **dadurch gekennzeichnet, dass** die Rollen (105) mittels den Wirkelementen (107, 117) jeweils mit einer Bewegungskomponente senkrecht zur Hauptfläche (108) zwischen wenigstens zwei Positionen bewegbar sind.

12. Verfahren nach einem der Ansprüche 7 bis 10, **dadurch gekennzeichnet, dass** die Beschleunigungseinrichtung (119) eine Abrollführung (117) umfasst, und die Rollen (105) in der Zuförderstrecke (4) entlang der Abrollführung (117) abrollen.

13. Verfahren nach einem der Ansprüche 7 bis 12, **dadurch gekennzeichnet, dass** die Förderbehälter (10) über die Rollen (105) entlang der Zuförderstrecke (4) in eine von der Fördergeschwindigkeit des Förderorgans (101) abweichende Geschwindigkeit versetzt werden.

14. Verfahren nach einem der Ansprüche 1 bis 13, **dadurch gekennzeichnet, dass** die Transfereinrichtung eine Weiche (8) umfasst, welche mit einer Steuerungseinrichtung (21) zusammenwirkt, und über welche die Förderbehälter (10) wahlweise dem Neigemechanismus (6) zugeführt oder auf dem Förderorgan (101) weitergefördert werden.

15. Vorrichtung zum Transferieren von Fördergütern (20) von mindestens einem Zuförderer (1) an einen Wegförderer (31) in einem Transferbereich (5), wobei der mindestens eine Zuförderer (1) ein entlang einer Zuförderstrecke angetriebenes Förderorgan (101) zum Fördern von Fördergütern (20) in den Transferbereich (5) sowie verbindungsfrei auf dem Förderorgan (101) aufliegende Förderbehälter (10) umfasst, in welchen die Fördergüter (20) in den Transferbereich (5) förderbar sind, und der Wegförderer (31) entlang einer Transferförderstrecke bewegbare Förderbehälter (62) zur Übernahme der von dem mindestens einen Zuförderer (1) abgegebenen Fördergüter (20) enthält, wobei die Vorrichtung eine Beschleunigungseinrichtung (119) aufweist, welche dazu ausgebildet ist, dem Förderorgan (101) aufliegenden Fördergüter (20) entlang der Zuförderstrecke zum Transferbereich (5) hin relativ zum Förderorgan (101) zu beschleunigen und in eine takt-synchrone Nebeneinanderförderung mit einem Förderbehälter (62) des Wegförderers (61) zu bringen,
wobei der mindestens eine Zuförderer (1, 1') im Transferbereich (5) eine Transfereinrichtung mit einem Neigemechanismus (6) enthält, mittels welchem Förderbehälter (10) des Zuförderers (1, 1') während ihrer Förderung entlang der Zuförderstrecke zwecks Abgabe von Fördergütern (20) an die Förderbehälter (62) des Wegförderers (61) in Förderrichtung (F) betrachtet zur Seite neigbar sind,
wobei der Neigemechanismus (6) dazu ausgebildet ist, die Förderbehälter (10) mindestens teilweise vom Förderorgan (101) abzuheben, und
wobei der Neigemechanismus (6) einen Förderantrieb (7) enthält, mittels welchem die Förderbehälter (10) entlang des Neigemechanismus (6) in Förderrichtung (F) unabhängig vom Förderorgan (101) förderbar sind.

## Claims

1. A method for transferring conveyed items (20) from at least one feed conveyor (1) onto an outgoing conveyor (31), in a transfer region (5), wherein the at least one feed conveyor (1) comprises a conveying member (101) which is driven along a feed conveying stretch, for conveying conveyed items (20) into the transfer region (5) as well as conveying containers (10) which lie on the conveying member (101) in a connection-free manner and in which the conveyed items (20) are conveyed into the transfer region (5), and the outgoing conveyor (31) comprises conveying containers (62) which are movable along a transfer conveying stretch for taking over the conveyed items (20) which are delivered by the at least one feed conveyor (1), wherein the conveyed items (20) which are conveyed in the conveying containers (10) which lie on the conveying member (101) via the conveying containers (10) are accelerated relative to the conveying member (101) along the feed conveying stretch towards the transfer region (5) via an acceleration device (119) and for the purpose of delivery of the conveyed items (20) are brought into a cyclically synchronous side-by-side conveying with a conveying container (62) of the outgoing conveyor (61) and are transferred onto the outgoing conveyor (31) in the transfer region (5),
wherein the at least one feed conveyor (1, 1') in the transfer region (5) comprises a transfer device with an inclining mechanism (6), by way of which conveying containers (10) of the feed conveyor (1, 1') during their conveying along the feed conveying stretch are inclined to the side considered in the conveying direction (F) for the purpose of delivery of conveyed items (20) onto the conveying containers (62) of the outgoing conveyor (61),
wherein the inclining mechanism (6) lifts the conveying containers (10) at least partly from the conveying member (101),
and wherein the inclining mechanism (6) comprises a conveying drive (7), by way of which the conveying containers (10) are conveyed along the inclining mechanism (6) in the conveying direction (F) independently of the conveying member (101).

2. A method according to claim 1, **characterised in that** in the transfer region (5), a feed conveying stretch of a feed conveyor (1, 1') runs along the transfer conveying stretch of the outgoing conveyor (31) on both sides considered in the conveying direction (F), and conveyed items (20) are transferred into conveying containers (62) of the outgoing conveyor (61) in an alternating manner from both sides

3. A method according to claim 2, **characterised in that** in regular operation, every second conveying container (62) of the outgoing conveyor (61) is loaded from a first side and every second conveying container (62) of the outgoing conveyor (61) which shifted by one is loaded with a conveyed item (20) from a second side.

4. A method according to one of the claims 2 to 3, **characterised in that** given the presence of a conveying container (10') of a feed conveyor (1, 1') which is not ready for transfer and from which no conveyed item (20') can or is to be transferred, conveying containers (10) which in the conveying direction (F) are subsequent to the conveying container (10') which is not ready for transfer are repositioned to the front in the conveying direction (F) by one conveying container position of the outgoing container (61) on both feed conveying stretches by way of the acceleration device (119).

5. A method according to one of the claims 2 to 3, **characterised in that** given the presence of a conveying container (62') of the outgoing conveyor (61) which is not ready for transfer and into which no conveyed item (20) can be transferred, the conveying container (10) of a feed conveyor (1, 1') which forms a transfer pairing with the conveying container (62') which is not ready for transfer, as well as conveying containers (10) of the feed conveyors (1, 1') which on both feed conveying stretches are subsequent to this conveying container in the conveying direction (F), considered in the conveying direction are repositioned back by one conveying container position of the outgoing conveyor (61) by way of the acceleration device (119).

6. A method according to one of the claims 1 to 5, **characterised in that** the conveying member (101) of the at least one feed conveyor (1, 1') forms a sheet-like main surface (108) which faces the conveyed item (20) and defines the conveying stretch and the conveying member (101) comprises at least one conveying element (102) which forms at least a part of the main surface (108).

7. A method according to claim 6, **characterised in that** the conveying member (101) comprises rollers (105) which via a roller holder (104) are mounted in a rotatable manner about roller pivots (106) on the at least one conveying element (102), wherein the rollers (105) project at least partly beyond the main surface (108) of the conveying element (102), so that the conveying containers (10) of the at least one feed conveyor (1, 1') lie on the rollers (105).

8. A method according to claim 7, **characterised in that** the rollers (105) in a drive position are driven along the feed conveying stretch via the acceleration device (119) for accelerating the conveyed items (20) or the conveying containers (10) relative to the conveying member (101).

9. A method according to one of the claims 1 to 8, **characterised in that** the conveying member (101) comprises rollers (105) which via a roller holder (104) are rotatably mounted about roller pivots (106) on the at least one conveying element (102) and which can selectively assume the state of a freewheel position, an arrested position or a drive position, wherein the rollers (105) project at least partly beyond the main surface (108) of the conveying element (102), so that the conveying containers (10) lie on the rollers (105).

10. A method according to one of the claims 7 to 9, **characterised in that** the rollers (105) are each movable between at least two spatially different positions by way of active elements (107, 117), in which positions the rollers (105) assume different states from the group of states comprising the arrested position, the freewheel position and the drive position.

11. A method according to claim 10, **characterised in that** the rollers (105) are each movable with a movement component perpendicular to the main surface (108) between at least two positions by way of the active elements (107, 117).

12. A method according to one of the claims 7 to 10, **characterised in that** the acceleration device (119) comprises a roll guide (117), and the rollers (105) roll along the roll guide (117) in the feed conveying stretch (4).

13. A method according to one of the claims 7 to 12, **characterised in that** the conveying containers (10) along the feed conveying stretch (4) and via the rollers (105) are brought to a speed which differs from the conveying speed of the conveying member (101).

14. A method according to one of the claims 1 to13, **characterised in that** the transfer device comprises a diverter (8) which interacts with a control device (21) and via which the conveying containers (10) are selectively fed to the inclining mechanism (6) or are conveyed further on the conveying member (101).

15. An appliance for transferring conveyed items (20) from at least one feed conveyor (1) onto an outgoing conveyor (31) in a transfer region (5), wherein the at least one feed conveyor (1) comprises a conveying member (101) which is driven along a feed conveying stretch for conveying conveyed items (20) into the transfer region (5) as well as conveying containers (10) which lie on the conveying member (101) in a connection-free manner and in which the conveyed items (20) are conveyed into the transfer region (5), and the outgoing conveyor (31) comprises conveying containers (62) which are movable along a transfer conveying stretch for taking over conveyed items (20) which are delivered from the at least one feed conveyor (1),
wherein the appliance comprises an acceleration device (119) which is designed to accelerate conveyed items (20) which lie on the conveying member (101) along the feed conveying stretch towards the transfer region (5), relative to the conveying member (101) and to bring them into a cyclically synchronous side-by-side conveying with a conveying container (62) of the outgoing conveyor (61),
wherein the at least one feed conveyor (1, 1') in the transfer region (5') comprises a transfer device with an inclining mechanism (6), by way of which conveying containers (10) of the feed conveyor (1, 1') during their conveying along the feed conveying stretch and considered in the conveying direction (F) are inclinable to the side for the purpose of transferring conveyed items (20) onto the conveying containers (62) of the outgoing conveyor (61),
wherein the inclining mechanism (6) is designed to at least partly lift the conveying containers (10) from the conveying member (101),
and wherein the inclining mechanism (6) comprises a conveying drive (7), by way of which the conveying containers (10) can be conveyed along the inclining mechanism (6) in the conveying direction (F) independently of the conveying member (101).

## Revendications

1. Procédé pour transférer des produits à transporter (20) d'au moins un transporteur d'amenée (1) à un transporteur d'évacuation (31) dans une zone de transfert (5), le au moins un transporteur d'amenée (1) comprenant un organe de transport (101) entraîné le long d'un trajet de transport d'amenée pour transporter des produits à transporter (20) dans la zone de transfert (5) ainsi que des récipients de transport (10) reposant sans liaison sur l'organe de transport (101), dans lesquels les produits à transporter (20) sont transportés dans la zone de transfert (5), et le transporteur d'évacuation (31) contient des récipients de transport (62) mobiles le long d'un trajet de transport de transfert pour la réception des produits à transporter (20) délivrés par le au moins un transporteur d'alimentation (1), les produits à transporter (20) transportés dans les récipients de transport (10) et reposant sur l'organe de transport (101) par l'intermédiaire des récipients de transport (10) étant accélérés le long du trajet d'amenée vers la zone de transfert (5) par rapport à l'organe de transport (101) par l'intermédiaire d'un dispositif d'accélération (119) et étant amenés, en vue de la délivrance des produits à transporter (20), dans un transport côte à côte synchronisé avec un récipient de transport (62) du transporteur d'évacuation (61) et étant transférés dans la zone de transfert (5) au transporteur d'évacuation (31), où l'au moins un transporteur d'alimentation (1, 1') comprend dans la zone de transfert (5) un dispositif de transfert avec un mécanisme d'inclinaison (6), au moyen duquel des récipients de transport (10) du transporteur d'alimentation (1, 1') sont inclinés latéralement, vu dans la direction de transport (F), pendant leur transport le long de la section de transport d'alimentation, en vue de délivrer des produits à transporter (20) aux récipients de transport (62) du transporteur d'évacuation (61), le mécanisme d'inclinaison (6) soulève au moins partiellement les récipients de transport (10) de l'organe de transport (101), et le mécanisme d'inclinaison (6) contient un entraînement de transport (7) au moyen duquel les récipients de transport (10) sont transportés le long du mécanisme d'inclinaison (6) dans la direction de transport (F) indépendamment de l'organe de transport (101).

2. Procédé selon la revendication 1, **caractérisé en ce que**, dans la zone de transfert (5), le long du trajet de transfert du transporteur d'évacuation (31), vu dans la direction de transport (F), un trajet d'alimentation d'un transporteur d'alimentation (1, 1') s'étend respectivement des deux côtés, et des produits à transporter (20) sont transférés en alternance des deux côtés dans des récipients de transport (62) du transporteur d'évacuation (61).

3. Procédé selon la revendication 2, **caractérisé en ce qu'**en mode de fonctionnement régulier, chaque deuxième récipient de transport (62) du transporteur d'évacuation (61) est alimenté en produit à transporter (20) par un premier côté et chaque deuxième récipient de transport (62) décalé d'une unité du transporteur d'évacuation (61) est alimenté en produit à transporter (20) par un deuxième côté.

4. Procédé selon l'une des revendications 2 à 3, **caractérisé en ce que**, en présence d'un récipient de transport (10') d'un transporteur d'alimentation (1, 1') qui n'est pas prêt pour le transfert et à partir duquel aucun produit à transporter (20') ne doit ou ne peut être transféré, les récipients de transport (10) qui suivent le récipient de transport (10') non prêt pour le transfert dans la direction de transport (F) sont repositionnés vers l'avant dans la direction de transport (F) d'une position de récipient de transport du convoyeur d'acheminement (61) au moyen du dispositif d'accélération (119).

5. Procédé selon l'une des revendications 2 à 3, **caractérisé en ce que**, en présence d'un récipient de transport (62') non prêt pour le transfert du transporteur d'évacuation (61), dans lequel aucun produit à transporter (20) ne peut être transféré, le récipient de transport (10) d'un transporteur d'amenée (1, 1') ainsi que des récipients de transport (10) des convoyeurs d'amenée (1, 1') qui le suivent dans la direction de transport (F) sur les deux trajets d'alimentation dans la direction de transport (F) sont repositionnés en arrière au moyen du dispositif d'accélération (119) dans la direction de transport (F) autour d'une position de récipient de transport du transporteur d'évacuation (61).

6. Procédé selon l'une des revendications 1 à 5, **caractérisé en ce que** l'organe de transport (101) de l'au moins un convoyeur d'amenée (1, 1') forme une surface principale (108) en forme de bande, tournée vers le produit à transporter (20) et définissant le trajet de convoyage, et l'organe de transport (101) comprend au moins un élément de transport (102) qui forme au moins une partie de la surface principale (108).

7. Procédé selon la revendication 6, **caractérisé en ce que** l'organe de transport (101) contient des rouleaux (105) montés en rotation autour d'axes de rouleaux (106) sur l'au moins un élément de transport (102) par l'intermédiaire d'un support de rouleaux (104), les rouleaux (105) dépassant au moins partiellement de la surface principale (108) de l'élément de transport (102), de sorte que les récipients de transport (10) de l'au moins un transporteur d'alimentation (1, 1') reposent sur les rouleaux (105).

8. Procédé selon la revendication 7, **caractérisé en ce que** les rouleaux (105) sont entraînés le long du trajet d'alimentation pour accélérer les produits transportés (20) ou les récipients de transport (10) par rapport à l'organe de transport (101) dans une position d'entraînement via le dispositif d'accélération (119).

9. Procédé selon l'une des revendications 1 à 8, **caractérisé en ce que** l'organe de transport (101) comporte des rouleaux (105) montés rotatifs autour d'axes de rouleaux (106) sur l'au moins un élément de transport (102) par l'intermédiaire d'un support de rouleaux (104), ces rouleaux pouvant prendre au choix l'état d'une position de roue libre, d'une position de blocage ou d'une position d'entraînement, les rouleaux (105) dépassant au moins partiellement de la surface principale (108) de l'élément de transport (102), de sorte que les récipients de transport (10) reposent sur les rouleaux (105).

10. Procédé selon l'une des revendications 7 à 9, **caractérisé en ce que** les rouleaux (105) sont mobiles au moyen d'éléments d'actionnement (107, 117) respectivement entre au moins deux positions spatialement différentes, dans lesquelles les rouleaux (105) adoptent différents états parmi le groupe d'états comprenant la position de blocage, la position de roue libre et la position d'entraînement.

11. Procédé selon la revendication 10, **caractérisé en ce que** les rouleaux (105) peuvent être déplacés au moyen des éléments actifs (107, 117) respectivement avec une composante de mouvement perpendiculaire à la surface principale (108) entre au moins deux positions.

12. Procédé selon l'une des revendications 7 à 10, **caractérisé en ce que** le dispositif d'accélération (119) comprend un guide de déroulement (117), et les rouleaux (105) roulent dans le trajet d'amenée (4) le long du guide de déroulement (117).

13. Procédé selon l'une des revendications 7 à 12, **caractérisé en ce que** les récipients de transport (10) sont mis à une vitesse différente de la vitesse de convoyage de l'organe de transport (101) par l'intermédiaire des rouleaux (105) le long du trajet d'amenée (4).

14. Procédé selon l'une des revendications 1 à 13, **caractérisé en ce que** le dispositif de transfert comprend un aiguillage (8) qui coopère avec un dispositif de commande (21) et par lequel les récipients de transport (10) sont, au choix, amenés au mécanisme d'inclinaison (6) ou transportés sur l'organe de transport (101).

15. Dispositif pour transférer des produits à transporter (20) d'au moins un transporteur d'alimentation (1) à un transporteur d'évacuation (31) dans une zone de transfert (5), le au moins un transporteur d'alimentation (1) comprenant un organe de transport (101) entraîné le long d'un trajet d'alimentation pour transporter des produits à transporter (20) dans la zone de transfert (5) ainsi que des récipients de transport (10) reposant sans liaison sur l'organe de transport (101), dans lesquels les produits à transporter (20) peuvent être transportés dans la zone de transfert (5), et le transporteur d'évacuation (31) contient des récipients de transport (62) mobiles le long d'un trajet de transport de transfert pour la prise en charge des produits à transporter (20) délivrés par le au moins un transporteur d'amenée (1), le dispositif présentant un dispositif d'accélération (119) qui est conçu pour accélérer par rapport à l'organe de transport (101) les produits à transporter (20) reposant sur l'organe de transport (101) le long du trajet de transport d'amenée vers la zone de transfert (5) et pour les amener dans un transport côte à côte synchrone avec un récipient de transport (62) du transporteur d'évacuation (61), dans lequel l'au moins un transporteur d'alimentation (1, 1') contient dans la zone de transfert (5) un dispositif de transfert avec un mécanisme d'inclinaison (6), au moyen duquel des récipients de transport (10) du transporteur d'alimentation (1, 1') peuvent être inclinés latéralement, vu dans la direction de transport (F), pendant leur transport le long de la trajet d'alimentation, en vue de délivrer des produits à transporter (20) aux récipients de transport (62) du transporteur d'évacuation (61), le mécanisme d'inclinaison (6) étant conçu pour soulever les récipients de transport (10) au moins partiellement de l'organe de transport (101), et le mécanisme d'inclinaison (6) contenant un entraînement de transport (7) au moyen duquel les récipients de transport (10) peuvent être transportés le long du mécanisme d'inclinaison (6) dans la direction de transport (F) indépendamment de l'organe de transport (101).
